# FASCICULE DE BREVET EUROPEEN

(11) **EP 3 656 520 B1**
(45) Date de publication et mention de la délivrance du brevet: **01.11.2023**
(21) Numéro de dépôt: 19219690.5
(22) Date de dépôt: 07.12.2016
(51) Int. Cl.: B27K 5/00, B27K 3/08, B27K 3/15

(54) **PROCEDE DE DELIGNIFICATION PARTIELLE ET DE REMPLISSAGE D'UN MATERIAU LIGNO CELLULOSIQUE, ET STRUCTURE DE MATERIAU COMPOSITE OBTENUE PAR CE PROCEDE**
VERFAHREN ZUR TEILWEISEN DELIGNIFIZIERUNG UND FÜLLUNG MIT EINEM HOLZZELLULOSEMATERIAL, UND VERBUNDMATERIALSTRUKTUR, DIE DURCH DIESES VERFAHREN ERZEUGT WIRD
METHOD FOR PARTIAL DELIGNIFICATION AND FILLING OF A LIGNOCELLULOSIC MATERIAL, AND COMPOSITE MATERIAL STRUCTURE OBTAINED BY SAID METHOD

(30) Priorité: 07.12.2015 FR 1561953
(43) Date de publication de la demande: 27.05.2020
(62) Demande divisionnaire de: 16813100.1
(73) Titulaire: SAS Woodoo, 75001 Paris (FR)
(72) Inventeur: BOITOUZET, Timothée, 75001 PARIS (FR); DROGUET, Benjamin, 19100 BRIVE-LA-GAILLARDE (FR)
(74) Mandataire: Santarelli

(56) Documents cités:
- WO-A1-90/02612
- WO-A1-2014/113884
- WO-A1-2017/136714
- WO-A2-2012/080702
- US-A1- 2010 081 798
- SIEGFRIED FINK: "Transparent Wood - A New Approach in the Functional Study of Wood Structure", HOLZFORSCHUNG: INTERNATIONAL JOURNAL OF THE BIOLOGY, CHEMISTRY, PHYSICS AND TECHNOLOGY OF WOOD, vol. 46, no. 5, 1 janvier 1992 (1992-01-01), pages 403-408, XP055615779, DE ISSN: 0018-3830, DOI: 10.1515/hfsg.1992.46.5.403
- Luce F.: "Delignified impregnated wood", Mechanical Engineering , vol. 66, no. 10 1 October 1944 (1944-10-01), pages 654-655, Retrieved from the Internet: URL:https://archive.org/details/sim_mechan ical-engineering_1944-10_66_10/page/654/mo de/1up [retrieved on 2022-07-05]

## Description

La présente invention concerne un traitement de modification de matériau ligno-cellulosique, et tout matériau ligno-cellulosique modifié susceptible d'être obtenu (qualifié de *« composite »*) par ce traitement dont l'architecture native a été sensiblement et avantageusement conservée. En particulier, l'invention concerne un procédé de délignification partielle et de remplissage d'une structure de matériau ligno-cellulosique, et la structure obtenue par ce procédé. Le matériau ligno-cellulosique est de préférence du bois.

### Technique antérieure

Il est connu que certaines propriétés mécaniques du bois, telles que la résistance à la compression et la résistance à la flexion, peuvent être améliorées par imprégnation du bois avec au moins un monomère et/ou polymère. Un tel bois imprégné avec un monomère et/ou un polymère est couramment désigné comme un composite de bois. Il s'agit généralement de bois massif imprégné superficiellement i.e. essentiellement sur une faible épaisseur depuis la surface. Un procédé connu de production de composite de bois comporte l'immersion du bois à traiter dans un fluide telle qu'une solution aqueuse, dans laquelle est (sont) dissout(s) le monomère et/ou le polymère, et la mise sous pression du fluide, de façon à incorporer le monomère et/ou le polymère dans le bois. Cependant, un tel procédé est long et requiert l'utilisation d'une pression élevée de façon à imprégner le bois en profondeur.

Il a donc été recherché une amélioration de ce procédé, par exemple par utilisation de vide partiel. Cependant, aucune solution satisfaisante n'est apparue, puisque toutes les techniques ainsi envisagées sont pénalisées par leur longue durée, principalement à cause de la difficulté d'imprégner les pores du bois en profondeur.

Il est également connu d'imprégner le bois avec du méthacrylate de méthyle (MMA) puis de polymériser le monomère ainsi imprégné. La polymérisation peut par exemple être effectuée en utilisant des radiations à haute énergie telle que des rayons laser ou des rayons gamma. Cette méthode est lente, et l'utilisation de radiations à haute énergie s'avère particulièrement coûteuse.

D'autre part, il a été proposé dans le document WO 90/02612 d'effectuer une imprégnation de bois par un monomère en milieu acide ou basique (alcalin) grâce à l'utilisation de fluide (à l'état) supercritique. Ce fluide supercritique facilite l'imprégnation du monomère ou du polymère dans le matériau poreux.

Un premier mode de réalisation proposé dans WO 90/02612 comprend l'imprégnation de bois avec un milieu alcalin ou acide en présence d'un premier fluide maintenu dans des conditions supercritiques, la digestion du bois imprégné par ce milieu en présence d'un second fluide maintenu sous conditions supercritiques, de façon à extraire du bois des substances extractibles et de la lignine, ce qui conduit à l'obtention de fibres essentiellement discrètes, que l'on sépare du fluide supercritique et des produits extractibles. Le bois ainsi obtenu est récupéré puis converti en papier.

Ce premier mode de réalisation est uniquement réservé à des copeaux (*« chips »*) de bois, puisqu'il apparaît qu'une partie très importante, sinon la totalité, de la lignine est extraite du bois, ce qui conduit à détruire l'architecture interne du bois. Ainsi, dans les exemples de WO 90/02612, ces copeaux sont réduits à l'état de pulpe une fois les substances extractibles et la lignine extraites. La pulpe ainsi obtenue, à l'état de fibres discrètes agglomérées en pâte, permet de réaliser des panneaux de bois (de type agglomérés) de qualité supérieure en termes de propriétés mécaniques par rapport à l'état de la technique.

Un second mode de réalisation proposé dans WO 90/02612 comprend le traitement d'un matériau contenant de la cellulose par un premier fluide à l'état supercritique, de façon à extraire les substances extractibles (mais pas la lignine) du matériau comportant de la cellulose ; la séparation du solvant supercritique contenant les substances extractibles du matériau, de façon à obtenir un matériau comportant moins de substances extractibles ; la mise en contact du matériau contenant la cellulose et moins de substances extractibles avec un second fluide supercritique comprenant un monomère polymérisable, dans des conditions suffisantes pour permettre l'imprégnation du monomère dans le matériau ; la précipitation du monomère à l'intérieur de la cellulose ; et la polymérisation du monomère précipité *in situ,* de façon à réaliser un matériau contenant la cellulose. Ce matériau présenterait des propriétés améliorées.

Ce second mode de réalisation est plutôt réservé à des pièces de bois d'une certaine taille. Ainsi, dans les exemples, des morceaux de bois de charpente *(« large blocks or logs* ») sont traités soit avec du MMA, soit avec du styrène. Cependant, les deux modes de réalisation décrits dans WO 90/02612 ne permettent pas de conserver la micro-architecture du bois tout en permettant qu'un matériau de remplissage remplace suffisamment de lignine. En effet, le traitement selon ce document, soit produit une délignification qui est quasiment totale, et qui conduit à l'obtention de pulpe, soit produit une délignification qui est extrêmement faible, voire nulle.

Plus récemment, le document WO 2010/089604 a décrit l'obtention de pièces de matériau ligno-cellulosique produites par imprégnation du matériau avec une formulation à base d'anhydride acétique à pH acide, puis imprégnation du matériau avec une formulation à base de produit organique aqueux, suivie par une pressurisation de façon à imprégner les deux solutions dans le matériau, puis d'un chauffage de façon à réticuler le matériau organique présent dans le matériau ligno-cellulosique ainsi imprégné. Cela permet de fabriquer une pièce de matériau ligno-cellulosique composite durci. Cependant, le remplissage de la pièce de matériau par le produit organique ne peut être que partiel voire superficiel (i.e. sur une faible épaisseur depuis la surface), ce qui implique que le traitement d'une pièce relativement épaisse ne peut donner des propriétés de résistance mécanique améliorées.

Il a également été décrit la production de feuilles de *« papier* » transparentes d'épaisseur inférieure à 100 µm (Advanced Materials, 2009, 21, 1595-1598, « Optically transparent nanofiber paper », Nogi et al., 2009), notamment par l'utilisation d'un composé monomère de résine acrylique (tricyclodécane diméthyl diméthacrylate -TCDDMA-). Le procédé de production comprend une délignification totale, qui conduit à l'obtention de fibres discrètes, non organisées.

Ces fibres sont ensuite traitées par la résine, avant d'être compressées puis réticulées.

Le document WO 2014/113884 décrit un procédé de traitement de pièces de bois par mise en contact avec deux solutions A et B, respectivement sources d'anions et de cations, de façon à procéder à une délignification du bois en conditions exothermiques, ceci conduisant à l'obtention d'une pulpe.

En conséquence, les méthodes connues à ce jour d'imprégnation du bois, ou de tout autre matériau ligno-cellulosique, pour en faire un matériau plus résistant, sont des méthodes compliquées à mettre en oeuvre, relativement coûteuses, et dont la mise en oeuvre est beaucoup trop lente pour pouvoir envisager de façon réaliste une production industrielle d'un matériau composite de bois.

Il reste donc à ce jour le besoin de disposer d'un procédé de traitement d'une structure de matériau ligno-cellulosique, de préférence de bois, de façon à obtenir une structure conservant l'architecture du bois, et constituée d'un matériau à propriétés mécaniques améliorées, en particulier en termes de résistance à la flexion et résistance à la compression, par rapport au matériau ligno-cellulosique avant traitement. Par *« traitement du matériau ligno-cellulosique »,* on entend ici traitement de la matière constituant ce matériau.

Un des premiers objets de l'invention est de pallier les inconvénients évoqués précédemment des méthodes de l'état de la technique, et notamment de fournir un procédé de traitement de matériau ligno-cellulosique simple à mettre en oeuvre, qui permette d'obtenir un matériau conservant l'architecture du bois et à propriétés mécaniques, chimiques et/ou optiques améliorées.

SIEGFRIED FINK, "Transparent Wood - A New Approach in the Functional Study of Wood Structure", HOLZFORSCHUNG: INTERNATIONAL JOURNAL OF THE BIOLOGY, CHEMISTRY, PHYSICS AND TECHNOLOGY OF WOOD, DE, (1992-01-01), Vol. 46, No. 5, décrit un procédé pour rendre transparents des échantillons de bois par inclusion de monomères. Foster Luce "Delignified impregnated wood", Mechanical Engineering, Vol. 66, No. 10, octobre 1944, pages 654-655, décrit des placages délignifiés imprégnés de résines phénol-formaldéhyde.

### Résumé de l'invention

L'invention a ainsi pour objet, sous un premier aspect, un procédé de traitement d'une structure de matériau ligno-cellulosique, le matériau ligno-cellulosique étant de préférence du bois, ledit procédé comprenant les étapes suivantes :
(1) au moins une étape de trempage de la structure de matériau ligno-cellulosique par au moins un fluide pour dissoudre partiellement la lignine présente dans le matériau ;
(2) au moins une étape de lavage de la structure issue de l'étape (1) par au moins un fluide organique de sorte à évacuer la lignine dissoute issue de l'étape de trempage (1), de façon à produire une structure partiellement délignifiée ;
(3) au moins une étape de remplissage de la structure partiellement délignifiée issue de l'étape de lavage (2) par au moins un composé de remplissage, de sorte à produire une structure partiellement délignifiée remplie; et
(4) au moins une étape de finition de la structure partiellement délignifiée remplie issue de l'étape de remplissage (3), de sorte à obtenir une structure de matériau composite formée d'un réseau tridimensionnel de composé de remplissage transformé incorporé dans un réseau de cellulose et de lignine, la masse volumique de la structure de matériau composite obtenue étant supérieure à celle de la structure de matériau ligno-cellulosique avant traitement.

Selon un mode de réalisation, l'invention concerne en particulier, un procédé de traitement d'une structure de matériau ligno-cellulosique, le matériau ligno-cellulosique étant de préférence du bois, ledit procédé comprenant les étapes suivantes :
(1) au moins une étape de trempage de la structure de matériau ligno-cellulosique par au moins un fluide pour dissoudre au moins 40 % et au plus 85 % en % poids de la lignine présente dans le matériau ;
(2) au moins une étape de lavage de la structure issue de l'étape (1) par au moins un fluide organique de sorte à évacuer la lignine dissoute issue de l'étape de trempage (1), de façon à produire une structure partiellement délignifiée ;
(3) au moins une étape de remplissage de la structure partiellement délignifiée issue de l'étape de lavage (2) par au moins un composé de remplissage, de sorte à produire une structure partiellement délignifiée remplie; et
(4) au moins une étape de finition de la structure partiellement délignifiée remplie issue de l'étape de remplissage (3), de sorte à obtenir une structure de matériau composite formée d'un réseau tridimensionnel de composé de remplissage transformé incorporé dans un réseau de cellulose et de lignine, la masse volumique de la structure de matériau composite obtenue étant supérieure à celle de la structure de matériau ligno-cellulosique avant traitement.

L'invention a également pour objet, sous un deuxième aspect, une structure de matériau composite comprenant de la lignine, de l'hémicellulose, de la cellulose et au moins un composé de remplissage, ladite structure étant susceptible d'être obtenue par la mise en oeuvre du procédé de traitement selon le premier aspect de l'invention, dans laquelle le matériau composite forme un réseau tridimensionnel de composé de remplissage transformé incorporé dans une structure de cellulose et de lignine.

Selon un mode de réalisation, l'invention concerne en particulier, sous ce deuxième aspect, une structure de matériau composite comprenant de la lignine, de l'hémicellulose, de la cellulose et au moins un composé de remplissage, ladite structure étant obtenue par la mise en oeuvre du procédé de traitement selon le premier aspect de l'invention, dans laquelle le matériau composite forme un réseau tridimensionnel de composé de remplissage transformé incorporé dans une structure de cellulose et de lignine.

L'invention concerne enfin, sous un troisième aspect, une pièce comprenant au moins une structure de matériau composite selon l'invention, ladite pièce étant un meuble ou une partie de meuble, un élément de bâtiment, une pièce automobile ou une pièce aéronautique.

Le procédé de traitement d'une structure de matériau ligno-cellulosique selon l'invention comprend la combinaison nouvelle et innovante d'une délignification partielle de la structure suivie d'un remplissage par un composé qui est stabilisé au sein de la structure ainsi délignifiée. Cette combinaison permet avantageusement l'obtention d'un matériau composite conservant sensiblement la structure du matériau et formé de deux réseaux interpénétrés, dans lequel l'architecture du matériau ligno-cellulosique a été altérée à l'échelle nanoscopique mais sensiblement conservée aux échelles microscopique et macroscopique. Par conséquent les propriétés du matériau ligno-cellulosique, qui a été transformé par traitement selon l'invention en matériau composite, qu'elles soient mécaniques, chimiques et/ou optiques, sont notablement améliorées par rapport au matériau avant traitement.

Sans vouloir être lié par une quelconque théorie, le demandeur pense que cela est dû au fait que le matériau composite comporte des liaisons moléculaires entre les fibres du matériau ligno-cellulosique plus fortes que celles qui existent dans le matériau ligno-cellulosique à l'état natif (ou naturel), notamment par l'intermédiaire du composé de remplissage transformé. Ainsi, le matériau composite combine avantageusement les propriétés du matériau ligno-cellulosique avec celles du composé de remplissage transformé (le plus souvent de type polymère réticulé ou non), car il est composé d'une structure densifiée du matériau ligno-cellulosique au sein de laquelle le composé de remplissage transformé joue le rôle de liant chimique continu des fibres ligno-cellulosiques entre elles, en ajoutant des points de contact et en remplissant les volumes de la micro-porosité et de la nano-porosité. Cela est plus efficace que le réseau de lignine natif qui lie ponctuellement les faisceaux de cellulose à l'échelle nanoscopique de manière anarchique. On parle ainsi d'ancrage chimique ou physico-chimique.

Le demandeur pense que la structure densifiée provient également d'une meilleure organisation (et donc d'une compacité améliorée) et d'une augmentation de la cristallinité de la structure ligno-cellulosique comparée à celle de la structure ligno-cellulosique native (dans laquelle la lignine est généralement amorphe).

Ainsi, au final, le matériau composite comprend un matériau ligno-cellulosique de résistance mécanique beaucoup plus importante qu'à l'état natif. On peut donc qualifier le matériau composite de *« durci ».* Cela explique les grandes qualités du matériau composite, et ses propriétés mécaniques, chimiques, et/ou optiques améliorées par rapport au matériau ligno-cellulosique natif.

### Description détaillée de l'invention

### Définitions

Par « architecture » du matériau ligno-cellulosique, on entend un ensemble hiérarchisé, d'organisation multi-échelles, à savoir les échelles macroscopique, microscopique, ou nanoscopique, assurant une solidité mécanique à l'ensemble. Tout ou partie de la structure de matériau ligno-cellulosique selon l'invention est issue de l'architecture du bois, dont quelques éléments sont brièvement rappelés ci-après.

A l'échelle atomique, le bois comprend environ 50 % d'atomes de carbone, 6 % d'atomes d'hydrogène et 40 % d'atomes d'oxygène, ainsi que des traces de composés inorganiques et de complexes organométalliques. Plus précisément, le bois est composé de 60 à 75 % d'hydrates de carbone sous forme de cellulose et d'hémicelluloses, ainsi que de 18 à 35 % de lignine. Les hémicelluloses sont des inclusions périphériques sur des faisceaux de cellulose, la lignine servant de manière anarchique, grâce à ses liaisons chimiques et physiques transversales avec les hémicelluloses, de liaison transversale entre ces faisceaux et donc de soutènement à l'architecture. A l'échelle macroscopique, deux parties se distinguent particulièrement dans le bois : le bois parfait (duramen), de coloration plus foncée, et l'aubier. Ces deux parties présentent des cernes de croissance où l'on distingue bois de printemps et bois d'été, plus foncé.

La cellule végétale, constituée d'une cavité, le lumen, d'une paroi et de canaux intercellulaires de transport de la sève, appelés ponctuations, est l'unité de construction de l'échelle microscopique. A l'état vivant, les cavités des cellules de bois proche de l'écorce de l'arbre assurent le transport de la sève des racines aux extrémités de l'arbre, tandis que les parois assurent les fonctions de résistance mécanique. Les cellules meurent au fur et à mesure de la croissance de l'arbre, n'assurant plus que le soutènement de l'arbre. Les parois de la cellule sont constituées de l'empilement de trois couches distinctes (la lamelle moyenne, la paroi primaire et la paroi secondaire) et aux propriétés physico-chimiques spécifiques. Chacune de ces couches cellulaires est constituée majoritairement de trois polymères : la lignine, la cellulose et les hémicelluloses. La lignine, présente principalement dans la lamelle moyenne de la paroi de la cellule végétale, rend solidaire les fibrilles de cellulose les unes aux autres et assure le maintien de la structure du bois. L'architecture multi-échelle du bois est anisotropique. Elle assure la solidité mécanique et l'opacité de l'ensemble du matériau ligno-cellulosique. L'architecture et la structure microscopique et nanoscopique des composants dépendent du bois considéré.

Les quantités respectives de la lignine, de la cellulose et des hémicelluloses sont variables en fonction du bois, de l'arbre et de la partie de l'arbre considérés. La cellulose est partiellement semi-cristalline tandis que la lignine est amorphe. La lignine est de couleur marron foncé alors que la cellulose et les hémicelluloses sont plutôt de couleur blanche. Ces trois polymères sont enchevêtrés si bien qu'une porosité nanoscopique existe dans le matériau, lieu de présence de molécules appelées extractibles. Bien qu'ancrées dans le matériau (principalement par liaisons physico-chimiques), ces molécules sont indépendantes du réseau constitué par le matériau ligno-cellulosique.

Les « extractibles » sont des molécules qui absorbent intensément la lumière visible. Leur présence dans une porosité implique l'existence d'un grand nombre d'interfaces, ce qui a une incidence sur la diffusion et la propagation d'un rayonnement lumineux au sein du matériau. Le terme « extractibles » regroupe un très large ensemble de molécules résultant de métabolites secondaires synthétisés lors de la croissance du matériau ligno-cellulosique. Ils sont présents en quantités relativement faibles (entre 5 et 10% en poids) sous forme de mélanges, parfois complexes, et hautement variables, qui sont liés à la nature du matériau ligno-cellulosique. La variabilité de ces molécules (en quantité et en qualité) est importante. La composition du sol et le climat du lieu de pousse d'un matériau ligno-cellulosique considéré influencent grandement l'identité chimique de ce matériau, y compris de ses extractibles.

Les extractibles regroupent des molécules présentant des structures, des fonctionnalités et des propriétés très variées, pouvant être polaires ou apolaires, hydrophiles ou hydrophobes, linéaires, mono-aromatiques ou poly-aromatiques. Parmi les extractibles, on peut citer les composés suivants : des cires et graisses, des terpènes (monoterpènes, diterpènes, triterpènes, sesquiterpènes, acides diterpèniques) et des composés phénoliques (dérivés de phénols, lignanes, stilbènes, flavonoides, biflavonoides, tannins condensés, tannins hydrolysables). Les extractibles assurent une protection chimique supplémentaire du bois. En effet, ils sont souvent impliqués dans les mécanismes de défense du matériau ligno-cellulosique aux attaques extérieures, tels que les champignons, les enzymes, les insectes xylophages, les microbes. Ils sont également à l'origine de l'odeur, en partie de la couleur, ainsi que de la durée de vie intrinsèque du matériau ligno-cellulosique.

L'architecture du matériau ligno-cellulosique est qualifiée de « native » (ou « naturelle ») quand le matériau, quelle que soit l'échelle d'organisation au niveau de laquelle on l'observe, possède des propriétés similaires à celles rencontrées dans le matériau ligno-cellulosique n'ayant subi aucun traitement. Le terme « ancrage chimique » se rapporte à une liaison moléculaire entre deux composés, tandis que les termes « ancrage physico-chimique » se rapportent à une liaison de type hydrogène, van der Waals, ionique ou métallique entre deux composés.

Le terme « espace de l'architecture du bois », également appelé plus simplement « espace » ou « volume » (correspondant à une absence substantielle de matière) par la suite, se rapporte aux cavités microscopiques du bois et aux ponctuations qui les joignent, remplies de sève dans les cellules vivantes, mais aussi aux espaces nanoscopiques entre les chaînes de polymères enchevêtrés contenus dans les parois des cellules.

Par « structure de matériau ligno-cellulosique », on entend selon l'invention un objet en trois dimensions constitué de matériau ligno-cellulosique, et possédant un certain volume (tridimensionnel) d'au moins 2 cm³ environ. C'est un objet macroscopique qui a sensiblement conservé l'architecture du matériau ligno-cellulosique natif. Ainsi, de préférence, la structure de matériau ligno-cellulosique comprend au moins une dimension d'au moins 5 mm et d'au plus 40 cm. Lorsque le matériau ligno-cellulosique est du bois, la structure peut être typiquement une coupe de bois (coupe transversale, coupe longitudinale, coupe radiale) par exemple d'épaisseur 5-7 mm voire 15 mm.

Plus précisément, la structure de matériau ligno-cellulosique peut être un élément de finition, un élément de second oeuvre ou un élément de premier oeuvre.

Par « élément de finition », on entend selon l'invention un objet à trois dimensions dont l'une des dimensions, généralement l'épaisseur, est très inférieure aux deux autres dimensions et typiquement d'au moins environ 0,5 mm, de préférence d'au moins environ 1 mm, de façon encore plus préférée d'au moins environ 2 mm et de façon encore plus préférée d'au moins environ 5 mm. Cet objet est généralement choisi dans le groupe formé par les feuilles de bois, les marqueteries les revêtements, les plaquettes, les plaques et les placages, de préférence les plaquettes et les plaques. Cela correspond sensiblement au terme « veneer » en anglais, de préférence « thick veneer ».

Par « élément de second oeuvre », on entend selon l'invention un objet à trois dimensions dont l'une des dimensions, généralement l'épaisseur, est très inférieure aux deux autres dimensions et typiquement d'au moins environ 1 cm, de préférence d'au moins 1,5 cm, de façon encore plus préférée d'au moins environ 2 cm. Cet objet correspond typiquement au second oeuvre dans le bâtiment, c'est à dire qu'il est choisi dans le groupe formé par les bardages, les tasseaux, les lambourdes, les plinthes, les parquets, les cloisons, les panneaux, les couvertures de toit et les menuiseries. Cela correspond sensiblement au terme « timber » en anglais.

Par « élément de premier oeuvre », on entend selon l'invention un objet à trois dimensions qui est typiquement un élément de construction, et dont la plus petite des trois dimensions est typiquement d'au moins environ 10 cm. Cet objet correspond au premier oeuvre (ou gros oeuvre) dans le bâtiment, c'est-à-dire qu'il est choisi dans le groupe formé par les poteaux, les poutres, les structures en treillis et les charpentes. Cela correspond sensiblement au terme « lumber » en anglais. Cet objet comprend aussi les panneaux de bois lamellés-croisés également dénommés « panneaux massifs » (ou « Cross-Laminated Timber » d'acronyme CLT en anglais), qui sont des panneaux constitués d'au moins trois plaques monocouches collées les unes sur les autres et disposées à plis croisés, autrement dit perpendiculairement les unes aux autres. En général, les panneaux CLT sont composés de 3 à 7 couches de bois dont l'orientation des fibres sont croisées. Ces différentes couches de bois oscillent entre 2 cm et 8 cm d'épaisseur, le panneau atteint lui une épaisseur totale variant de 6 cm pour le plus fin à 28 cm pour le plus épais.

Par « élément de bâtiment », on entend selon l'invention un élément du domaine technique du bâtiment, c'est-à-dire un élément de construction, qui est soit un élément de finition, un élément de second oeuvre ou un élément de premier oeuvre.

Par « fluide », on entend selon l'invention liquide ou gaz. Par « organique », on entend selon l'invention contenant principalement du carbone, de l'hydrogène avec de l'oxygène, et de l'azote.

Par « trempage », on entend selon l'invention que la structure est mise en contact avec le fluide par l'intermédiaire de la majeure partie, de préférence la quasi-totalité, de sa surface extérieure. Ainsi un trempage ne signifie pas forcément une immersion ; ce peut être tout simplement une mise en contact avec un fluide, partielle ou totale. Le trempage peut donner lieu à une imprégnation partielle ou totale par le fluide par l'action d'au moins une des forces suivantes : forces de diffusion, forces capillaires, forces de gravité, forces d'agitation extérieure au composé subissant le trempage ou toutes autres forces agissant sur la capacité du fluide à se mouvoir. Il n'est pas exclu que plusieurs de ces forces agissent ensemble, pour produire des effets identiques voire opposés.

On entend par « bois vert » du bois contenant encore des molécules d'eau libres ou liées au réseau cellulaire tel que du bois fraîchement abattu. Ainsi, un bois fraichement abattu est un bois contenant généralement 100% d'humidité relative, alors qu'un « bois humide » ne contient par définition que des molécules d'eau dans les cavités du réseau cellulaire soit environ 30% d'humidité relative. La mesure de l'humidité d'un bois est définie par le CNDB (Comité National pour le Développement du Bois) comme le rapport de la masse d'eau qu'il contient sur sa masse anhydre. Elle s'exprime par la formule suivante :
Humidité (%)= [(Masse humide - Masse anhydre)×100] / Masse anhydre. Au moment de l'abattage, le bois peut contenir plus d'eau que de matière-bois ; parfois deux fois plus dans certains peupliers. L'humidité relative est alors supérieure à 100%. D'après le CNDB, le point de saturation des fibres du bois, en dessous duquel se manifeste le « jeu de bois », est de l'ordre de 30% pour toutes les essences. Par « bois sec », on entend un bois qui a subi un traitement visant à réduire le pourcentage d'eau retenue dans les parois cellulaires, dont le taux d'humidité se situe donc en général de 0 à 30 %.

Par « A *et*/*ou B* », on entend A, ou B, ou A et B.

On entend par « %poids » le pourcentage massique. Sauf précision contraire, tout pourcentage indiqué dans la présente description est un pourcentage en masse.

### Matériau ligno-cellulosique

De façon particulièrement préférée, le matériau ligno-cellulosique est du bois. Ce bois peut être, selon l'invention, du bois vert, du bois humide ou du bois sec. Par exemple ce peut être du bois utilisé après stockage éventuel d'une durée plus ou moins longue (quelques jours à quelques années). Ce bois peut avoir été transformé après abattage, c'est-à-dire avoir été découpé, débité, raboté, libéré de son écorce, de son aubier ou de son duramen, ou être un bois d'ingénierie. Il est particulièrement avantageux selon l'invention de pouvoir traiter du bois vert voir du bois humide car cela permet de faire l'économie non négligeable d'une étape préalable de séchage du bois.

Ce peut être également un bois âgé c'est-à-dire un bois ayant déjà servi comme par exemple du bois de construction. Ainsi le procédé de l'invention permet avantageusement de recycler, et donc de revaloriser, du bois de construction. Pratiquement toutes les essences de bois, appelées également familles de bois, dont le taux de lignine est compris entre 15 et 35%, de préférence entre 18 et 32%, de façon encore plus préférée entre 20 et 30%, en poids, peuvent être traitées par le procédé selon l'invention, qu'elles appartiennent à la famille des angiospermes ou des gymnospermes, que ce soit du bois noble de type chêne ou frêne, ou bien du bois plus classique utilisé dans l'ameublement voire dans le domaine du bâtiment (de la construction) tel que du bois d'ameublement comme le frêne, du bois de construction comme le pin, du hêtre ou du douglas ou du bois plus malléable utilisé pour le tournage de pièces de bois ou le modélisme comme le peuplier ou certaines espèces de balsa.

On peut ainsi citer du bois de résineux tels que les gymnospermes, de façon préférée du sapin, du pin, du douglas, ou du bois de feuillus tel que du tilleul, du peuplier, du robinier faux-acacia, de l'aulne ou du saule. De façon plus générale, le bois de résineux est choisi parmi dans le groupe formé par le pin sylvestre, le pin, l'épicéa, l'if, le mélèze, le sapin, l'arole, le douglas, l'araucaria, le genévrier, le cèdre, le séquoia, le thuya et le cyprès.

Le bois de feuillus est choisi parmi les angiospermes, de préférence dans le groupe formé par l'aulne, le bouleau, le balsa, le hêtre, le frêne, l'eucalyptus, le bois de cotonnier, l'hévéa, le peuplier, le tremble, le saule, le robinier faux-acacia, le chêne, l'acajou, le guatambu, le fraké, le meranti, le tilleul, le châtaignier, l'érable, le marronnier, l'orme, le noisetier, le noyer, l'oranger des Osages, le platane, le sycomore, le pommier, le poirier, le citronnier et le tulipier, de façon plus préférée l'aulne, le bouleau, le balsa, le hêtre, le frêne, l'eucalyptus, le bois de cotonnier, l'hévéa, le peuplier, le saule, le robinier faux-acacia, le chêne, l'acajou, le tilleul, le châtaignier, l'érable, le marronnier, l'orme, le noisetier, le noyer, l'oranger des Osages et le platane.

Chaque essence ainsi citée peut comprendre de très nombreuses espèces. Ainsi l'essence du pin couvre par exemple plus d'une centaine d'espèces tel que le pin maritime ou le pin sylvestre ; l'essence du chêne couvre de nombreuses sous-essences, tel que le chêne rouge (dit d'Amérique) ou le chêne blanc (dit d'Europe).

Chaque essence de bois possède une architecture et une identité chimique (c'est-à-dire des quantités respectives de lignine et d'hémicelluloses, une longueur des fibres de cellulose, et des extractibles) qui lui sont propres. Au sein d'un même arbre, les différentes parties du bois (tel que l'aubier ou le duramen) peuvent également avoir des propriétés physico-chimiques différentes selon l'essence considérée.

Mais le matériau ligno-cellulosique peut aussi être tout matériau formé d'un réseau tridimensionnel de cellulose, et de lignine, tel que par exemple la paille, les textiles naturels (tels que le lin ou le chanvre), toute la biomasse forestière, incluant le bambou, la pâte à haut rendement, le papier, le carton, et le coton, si tant est que ce matériau est sous forme d'une structure possédant une certaine résistance mécanique et une micro-architecture propre à être valorisée par un composé de remplissage qui remplace partiellement la lignine. Ce matériau comprend généralement également au moins un polysaccharide. Une telle liste comporte les composés fibreux (c'est-à-dire contenant des fibres à l'état natif), tels le chanvre ou le lin, mais également les composés fibrés (c'est-à-dire des produits transformés contenant un ajout de fibres) et les graminées annuelles.

### Etape préalable optionnelle de traitement

Selon l'invention, l'étape de trempage (1) peut être précédée d'une étape préalable de traitement, généralement pour extraire partiellement des extractibles, comportant au moins une sous-étape de pré-trempage d'une structure de matériau ligno-cellulosique par au moins un fluide organique, généralement pour dissoudre une partie des extractibles présents dans le matériau ; suivie d'au moins une sous-étape de pré-lavage de la structure issue de la sous-étape de pré-trempage, par au moins un fluide organique, de sorte à évacuer les composés dissouts issus de la sous-étape de pré-trempage.

La structure de matériau ligno-cellulosique issue de l'étape préalable de traitement est la structure qui sera traitée par le procédé de traitement selon un premier aspect de l'invention.

Chacune de ces sous-étapes de pré-trempage et de pré-lavage peut être répétée une ou plusieurs fois au besoin, indépendamment de l'autre étape du moment que la sous-étape finale soit une sous-étape de pré-lavage.

Cette étape préalable permet, avantageusement, de dissoudre des extractibles, par libération des liaisons d'ancrage, notamment physiques, puis d'extraire ceux-ci.

Cette étape préalable permet avantageusement de faciliter la délignification partielle au cours des étapes ultérieures de trempage (1) et de lavage (2) selon l'invention.

La sous-étape de pré-trempage permet une extraction contrôlée et partielle des extractibles présents dans le matériau ligno-cellulosique. L'extraction peut ne pas être réalisée de façon homogène au sein du matériau ligno-cellulosique, notamment selon les conditions opératoires de cette sous-étape et la nature du matériau ligno-cellulosique. Par exemple, dans le cas du matériau ligno-cellulosique préféré, le bois, le bois de printemps est souvent plus sensible à la sous-étape de pré-trempage que le bois d'été.

Cette sous-étape permet avantageusement de conserver suffisamment d'extractibles au sein du matériau ligno-cellulosique pour préserver l'architecture du matériau ligno-cellulosique, mais également de fragiliser chimiquement l'architecture du matériau ligno-cellulosique de façon à faciliter l'action du fluide lors de l'étape de trempage (1), en d'autres termes à faciliter la délignification partielle ultérieure. Ainsi, à l'échelle atomique, des interactions faibles de type hydrogène ou van der Waals entre les polymères de soutènement et les extractibles sont détruites, ce qui rend la structure plus accessible pour une altération ultérieure à l'échelle nanoscopique. De même, à l'échelle microscopique, certaines ponctuations sont élargies et la pénétration ultérieure de fluide s'en trouve facilitée.

La sous-étape de pré-trempage est généralement effectuée dans des conditions opératoires similaires à celles de l'étape de trempage (1) décrite ci-après, dans des conditions permettant l'extraction partielle souhaitée des extractibles de la structure du matériau ligno-cellulosique.

Un mode de réalisation préféré est cependant l'utilisation d'un procédé osmotique, réalisé par l'utilisation d'une pression osmotique entre deux fluides organiques miscibles mis en contact. Dans un tel cas, un premier fluide organique de pré-trempage vise à saturer la structure du matériau ligno-cellulosique dans un premier temps, puis dans un second temps cette structure ainsi saturée est mise en contact avec un second fluide organique de pré-trempage. La pression osmotique entre les deux fluides crée un mouvement spontané des deux fluides l'un envers l'autre pour un retour à l'équilibre par un mélange des deux fluides. Cette mise en mouvement des deux fluides organiques se traduit par un entraînement d'une partie des extractibles vers l'extérieur de la structure, qui est au final mise en solution dans un mélange composé des deux fluides, généralement en proportion de 50%-50% en volume

Dans le cas du procédé osmotique, il est préféré que la structure de matériau ligno-cellulosique soit sèche (c'est-à-dire à taux d'humidité relative de 0 à 30%) avant sa mise en contact avec le premier fluide de la sous-étape de pré-trempage, et que cette mise en contact soit réalisée sous vide et avec chauffage. La structure ainsi saturée est également de préférence mise en contact sous vide et avec chauffage avec le second fluide de la sous-étape de pré-trempage.

Le premier et le second fluide de la sous-étape de pré-trempage sont avantageusement soit tous deux aqueux, soit tous deux non aqueux, de façon à favoriser leur miscibilité.

Une plus grande différence de propriétés entre ces deux fluides, telle qu'une différence de solvant, de pH, de salinité, et/ou du ou des composés éventuels mis en solution dans ce fluide organique permet généralement d'atteindre un retour à l'équilibre plus rapide.

Par exemple, une première solution de pré-trempage a été constituée d'éthanol, dans lequel baigne un échantillon de matériau ligno-cellulosique placé sous vide et à température ambiante pendant 8 h. L'échantillon a ensuite été mis en contact avec une seconde solution de pré-trempage aqueuse contenant de la soude à pH=12, sous vide et à température constante de 70°C, pendant 1 h. L'échantillon ainsi obtenu a été lavé par 3 à 4 séries d'eau chaude à 40-50°C et de solution aqueuse de soude à pH=12, jusqu'à obtenir une eau de lavage transparente. Comme il apparaît à l'homme du métier, la quantité et la nature des extractibles dissouts dans cette sous-étape de pré-trempage dépend de la nature du matériau ligno-cellulosique, mais également de la nature des deux fluides organiques de cette sous-étape.

Toutefois, cette sous-étape de pré-trempage peut cibler spécifiquement certains extractibles, auquel cas certains solvants peuvent être privilégiés. Par exemple, il peut être souhaité d'extraire sélectivement des composés hydrosolubles ou liposolubles. En effet, le fait d'extraire partiellement des composés liposolubles, telles que des graisses, peut favoriser l'hydrophilie au sein de la structure de matériau ligno-cellulosique, et donc faciliter les étapes (1) et (2) ultérieures si celles-ci sont réalisées au moyen d'un fluide organique aqueux. De même, le fait d'extraire partiellement des composés hydrosolubles, tels des cires ou des sucres, peut favoriser l'hydrophobie au sein de la structure de matériau ligno-cellulosique, et donc faciliter les étapes (1) et (2) ultérieures si celles-ci sont réalisées au moyen d'un fluide organique non aqueux.

La sous-étape de pré-lavage permet l'extraction des extractibles dissouts présents dans le matériau ligno-cellulosique à la suite de la sous-étape de pré-trempage. Cette sous-étape sert notamment à éviter que la présence des extractibles dissouts au sein de la structure ne limite l'action du fluide, et donc la délignification, au cours de l'étape de trempage (1).

La sous-étape de pré-lavage peut être effectuée dans des conditions de mise en oeuvre similaires à celles de l'étape de lavage (2) décrite ci-après. Ainsi, le fluide de la sous-étape de pré-lavage peut être tout fluide organique utilisé au cours de l'étape de lavage (2) décrite ci-après.

Par exemple, la sous-étape de pré-lavage peut être effectuée sous vide et à température ambiante à l'aide d'une solution aqueuse en alternance avec une solution aqueuse de soude à pH=12, l'alternance étant effectuée toutes les 15 min, cette sous-étape durant au total 1 heure.

Les extractibles, tels les terpènes, qui sont dissouts puis extraits de la structure de matériau ligno-cellulosique par l'étape préalable de traitement de l'invention peuvent avantageusement être valorisés dans le cadre du procédé de l'invention, dans un procédé de valorisation spécifique à chaque famille de molécules dissoutes, typiquement sur un plan industriel, par exemple pour la fabrication d'un composé chimique dans l'industrie pharmaceutique ou cosmétique. Pour certaines de ces valorisations, les composés extraits doivent subir des étapes de post-traitement, telles des fractionnements et/ou des purifications.

### Etape de trempage (1)

L'étape de trempage (1) permet la dissolution partielle et contrôlée d'une partie de la lignine présente dans le matériau, c'est-à-dire une délignification partielle. La délignification peut ne pas être réalisée de façon homogène au sein du matériau ligno-cellulosique, notamment selon les conditions opératoires des étapes (1) et (2), et la nature du matériau ligno-cellulosique.

La délignification partielle selon l'invention exclut l'obtention d'une pulpe de fibres de matériau ligno-cellulosique.

L'étape de trempage (1) permet à la fois de conserver suffisamment de lignine (sous forme native ou régénérée après recombinaison des radicaux formés lors de la dégradation de la lignine) au sein du matériau pour préserver l'architecture du matériau ligno-cellulosique natif, et d'extraire suffisamment de lignine grâce au fluide pour libérer au sein de l'architecture du matériau ligno-cellulosique de l'espace dans lequel va s'insérer le composé de remplissage de l'étape (3). Ainsi, la présence de lignine résiduelle au sein de la structure ne limite pas le remplissage des espaces existants, microscopiques ou nanoscopiques, ni de ceux nouvellement créés lors des étapes (1) et (2), par le composé de remplissage au cours de l'étape de remplissage (3). Une telle limitation pourrait inhiber fortement la propagation des chaînes polymériques par l'action de groupe hydroxyles (OH) qui bloqueraient les radicaux générés par un catalyseur de polymérisation.

La délignification partielle réalisée aux étapes (1) et (2) peut éventuellement servir, bien que ce ne soit pas son objectif premier, à extraire d'autres composants du matériau ligno-cellulosique tels les extractibles s'ils n'ont pas été extraits au cours de l'étape préalable optionnelle.

L'étape de trempage (1) peut être effectuée à température ambiante, ou bien par chauffage en présence d'une source de chaleur, à pression atmosphérique, sous vide ou sous pression ou par utilisation alternée de ces différentes conditions, ainsi qu'il est connu de l'homme du métier. Généralement, l'ajout de pression et de chaleur d'une part facilite l'action du fluide de trempage et d'autre part permet d'accélérer le processus d'hydrolyse de la lignine, ce qui est particulièrement avantageux pour une mise en oeuvre industrielle.

Le trempage donne lieu à une imprégnation partielle ou totale par le fluide (qui peut être liquide et/ou gazeux) généralement par l'action d'au moins un type de forces suivantes : force de diffusion, force capillaire, force de gravité, force d'agitation extérieure de la structure ou toute autre force agissant sur la capacité du fluide à se mouvoir. Le fluide peut être porté jusqu'à un état sub-critique ou supercritique, selon sa nature, ainsi qu'il est connu de l'homme du métier. L'étape de trempage (1) peut être réalisée en une ou plusieurs fois, c'est-à-dire que la mise en contact avec le fluide peut être réalisée en une ou plusieurs fois. Plusieurs fluides différents peuvent être utilisés, en alternance ou simultanément. La quantité de lignine extraite du matériau ligno-cellulosique dépend du matériau concerné, selon qu'il s'agit par exemple d'un bois de résineux, d'un bois de feuillus ou d'une graminée annuelle.

Ainsi, dans le cas où le matériau ligno-cellulosique est du bois de résineux, c'est généralement de 50 à 85 %, de préférence de 50 à 75 %, en % poids, de la lignine présente dans la structure qui est dissoute au cours de l'étape de trempage (1). En revanche, dans le cas où le matériau ligno-cellulosique est du bois de feuillus, c'est généralement de 40 à 60 %, de préférence de 45 à 55 %, en % poids, de la lignine présente dans la structure qui est dissoute au cours de l'étape de trempage (1). L'homme du métier est à même d'adapter la conduite des étapes (1) et (2) selon la structure du matériau ligno-cellulosique concernée. L'étape de trempage (1) doit permettre de conserver la quantité souhaitée de lignine dans la structure et de ne pas porter significativement atteinte à la micro-architecture du matériau ligno-cellulosique.

Le fluide peut être tout solvant ou mélange de solvants organiques permettant la délignification. De façon avantageuse, tout ou partie du fluide peut être recyclé après son utilisation.

Selon un mode de réalisation, le fluide est un « système complexe » composé d'un solvant majoritaire, appelé solvant primaire ou principal, et d'au moins un solvant minoritaire, appelé co-solvant. Le co-solvant est un composé liquide ajouté en faible quantité et le plus souvent miscible au solvant primaire. Le co-solvant sert généralement à améliorer la puissance de solvatation du solvant primaire vis-à-vis de la ou des espèces à dissoudre.

Les paramètres du solvant primaire (i.e. pH, constante diélectrique, force ionique, acidité, basicité, caractère oxydant ou réducteur) peuvent être adaptés par ajout d'au moins un composé permettant des propriétés de solvatation spécifique. Un acide, une base, un oxydant, un réducteur, et/ou encore un sel peu(ven)t également être ajouté(s) au fluide dans des proportions leur conférant une fonction de soluté ou de co-solvant, en fonction de leur état physico-chimique. Dans le cas où le solvant principal est l'eau, le système complexe est une solution aqueuse (appelée également solution), contenant de l'eau et au moins un soluté, qui peut être un co-solvant et/ou un composé solide dissout, tel un sel.

Les systèmes complexes peuvent être des systèmes miscibles, micellaires ou bi-phasiques et peuvent eux-mêmes être utilisés en mélange et/ou en séries. Selon un mode de réalisation, le fluide peut être :
- (i) une solution acide ou basique, aqueuse ou non ;
- (ii) une solution oxydante acide ou basique, aqueuse ou non ;
- (iii) un liquide ionique pur ;
- (iv) un liquide ionique en mélange avec un co-solvant ;
- (iv) un liquide ionique contenant une ou plusieurs enzymes ;
- (iv) un liquide ionique en mélange avec un co-solvant contenant une ou plusieurs enzymes ;
- (v) un liquide ionique en mélange avec un co-solvant et un fluide ;
- (iv) un liquide ionique en mélange avec un co-solvant, un fluide et contenant une ou plusieurs enzymes ;
- (v) un fluide contenant au moins un organisme biologique tel que des bactéries, des microbes ou des champignons ;
- (vi) et toute combinaison des éléments (i) à (vi).

Le premier composé cité de chaque élément (i) à (vi) de la liste est généralement présent majoritairement, c'est-à-dire à au moins 50% en poids.

Selon un mode de réalisation, le fluide de l'étape de trempage (1) est une solution organique, qui peut présenter n'importe quel pH. De préférence, la solution organique est acide, généralement de pH inférieur à 6,5, de façon encore plus préférée inférieur à 4,5, ou bien basique, de pH supérieur à 7,5, de façon encore plus préférée de pH supérieur à 9,5.

Outre l'eau, le fluide organique de l'étape de lavage (2) peut contenir tout liquide classiquement utilisé comme solvant en chimie. Les solvants purs et co-solvants privilégiés sont généralement choisis dans le groupe formé par l'acétate d'éthyle, l'acétate de butyle, l'acétate de méthyle, l'acétoacétate d'éthyle, l'acétone, l'acide acétique, l'acide citrique, l'acide formique, l'acide nitrique, l'acide oxalique, l'acide méthanoïque, l'anhydride acétique, le butanol, le butanone, le cyclohexane, le cyclopentane, le dichloroéthane, le dichlorométhane, le dioxane, l'eau, l'essence de térébenthine, l'éthanol, l'éther de glycol, l'éther de pétrole, l'éther diéthylique, l'éthylène de glycol, l'heptane, l'isopropanol, le méthanol, la monoéthanolamine, le pentane, le propanol, le propoxypropane, la pyridine, le toluène le xylène ; et leurs mélanges. Un solvant non aqueux est de préférence choisi dans le groupe formé par l'acétone, l'éthanol, l'hexane, l'isopropanol, l'heptane et leurs mélanges.

On entend par « acide » tout composé, seul ou en mélange, qui peut libérer un proton, tel un acide minéral ou organique, à l'état liquide ou sous forme de sel solide dissout. On peut citer ainsi les acides carboxyliques, les sels dérivés d'acides carboxyliques et les acides anhydrides tels que les acides organiques non phénoliques comme l'acide acétique, l'acide ascorbique, l'acide benzoïque, l'acide borique, l'acide carbonique, l'acide citrique, l'acide cyanique, l'acide dichloroactéique, l'acide formique, l'acide hydrazoïque, le vitriol, l'acide lactique, l'acide nitrique, l'acide oxalique, l'acide perchlorique, l'acide propionique, le cyanure d'hydrogène ; les acides organiques phénoliques : l'acide benzoïque, l'acide caféique, acide chlorogénique, l'acide férulique, l'acide gallique, l'acide gentisique, l'acide parahydroxybenzoique, l'acide paracoumarique, l'acide protocatéchique, l'acide vanilique, l'acide salicylique, l'acide sinapique, l'acide syringique, le phénol, le résorcinol ; les acides minéraux : l'acide chlorhydrique, l'acide chloroacétique, l'acide hydrobromique, l'acide bromoacétique, l'acide hydrochlorique, l'acide hydrofluorique, l'acide hypobromeux, l'acide hypochloreux, l'acide hypoiodeux, l'acide iodique, l'acide iodoacétique, l'acide phosphorique, l'acide phosphoreux, l'acide sélénique, l'acide sulfureux, l'acide sulfurique, l'acide tellurique, l'acide tribromoacétique, l'acide trichloroacétique, l'acide trifluoroacétique, l'eau forte ; et leurs mélanges.

On entend par « base » tout composé, seul ou en mélange, qui peut accepter un proton, à l'état liquide ou sous forme de sel inorganique mis en solution. On peut ainsi citer les amines, les amides, les sels alcalins comme l'acétate de sodium, l'amidure de sodium, la 3-amino-3-methylpentane, l'ammoniaque, l'aniline, l'azétidine, le bromopyridine, le butyl lithium, la cadaverine, le 2-chlorophénol, la 3-chlorophenol, la 4-chlorophenol, la choline, la cyclohexylamine, le diéthylamide lithium, la diéthylamine, la diisopropylamine, la diméthylamine, la 2,4-dimethylimidazzol, la 1,2-dimethylaminoéthane, la 1,2-dimethylpyrrolidine, l'éthylamine, l'éthanediamine, l'éthanolamine, l'éthanoate de sodium, l'éthanoate de potassium, l'hexamethylenediamine, l'hexylamine, l'hydrazine, l'hydride de sodium, l'hydroxyde de barium, l'hydroxyde de calcium, l'hydroxyde de fer, l'hydroxyde de lithium, l'hydroxyde de magnésium, l'hydroxyde de potassium, l'hydroxyde de sodium, l'hydroxylamine, la méthylamine, la 2-methyl-2-butanamine, la 3-méthyl-1-butanamine, la méthylglycine, la 1-méthylpiperidine, la monoéthanolamine, le n-butylamine, les nitrophénols, la N-méthylpyrrolidine, la N-méthylpyridinamine, la 3-pentanamine, la pentylamine, la pipéridine, la propylamine, la 1,3-propanediamine, la 4-pyridinamine, la pyridine, la pyrrolidine, le sec-butylamine et le tert-butylamine, la triéthylamine ; et leurs mélanges.

On entend par « composé oxydant » un composé, seul ou en mélange, qui a une action d'oxydation, c'est-à-dire qui est capable de capter un ou plusieurs électrons. Cet oxydant peut être un dérivé de la chimie du chlore tel que le chlorite de sodium, le chlorure de calcium, le chlorure de sodium, le dichlore, l'eau de javel, l'hypochlorite de calcium, l'hypochlorite de sodium, tout composé peroxyde tel que le peroxyde d'hydrogène, ou encore tout composé dérivé de l'action préalable d'un composé peroxyde sur une autre molécule, tel un peracide, issu de la réaction d'un peroxyde, tel le peroxyde d'hydrogène, et d'un acide. Les composés peroxydes sont des composés de formule générale ROOR', où chacun de R et R' est une chaîne hydrocarbonée telle qu'une chaîne alkyl, alkyloyl, alkyloxycarbonyl, aryl, aryloyl, or aryloxycarbonyl et leurs mélanges, pouvant être ou non substituée. Des exemples de chaînes hydrocarbonées sont : pour une chaîne alkyle : méthyl, éthyl, propyl, butyl, t-butyl, et pentyl ; pour une chaîne alkyloyl : éthyloyl, propyoyl, butyloyl et pentoyl ; pour une chaîne alkyloxycarbonyl : les esters de carbonate comme le carbonate d'éthyl, de propyl, de butyl, de pentyl ; pour une chaîne aryle : phényl, benzyl, chlorobenzyl, naphthyl, thiényl, indolyl pour une chaîne aryloyl : phényloyl et naphthyloyl ; pour une chaîne aryloxycarbonyls les esters de carbonate comme le carbonate de phényl ou de naphthyl.

Un tel composé oxydant peut être ajouté à un acide ou une base décrit(e) précédemment de façon à réaliser une solution acide oxydante ou une solution basique oxydante selon l'invention. Les acides et les base peuvent dans certains cas présenter eux-mêmes des propriétés oxydantes, mais il est possible de leur ajouter un composé oxydant pour renforcer cette propriété. Selon l'invention, un composé oxydant ajouté au composé acide ou basique peut réagir indépendamment ou former de nouvelles entités réactives. Ainsi par exemple, un peroxyde peut être associé à un acide carboxylique pour former un peracide, comme le peracide formique, le peracide acétique ou l'acide persulfurique.

On entend par « réducteur » un composé, seul ou en mélange, qui a une action de réduction. On peut ainsi citer des aldéhydes, la dithionite de sodium, l'hydroquinone, l'hydrure de sodium, le sulfite de sodium le thiosulfate de sodium. La famille des aldéhydes comprend notamment l'éthanal, le propanal, le butanal, le pentanal, le furfural, et leurs mélanges.

Un tel réducteur peut être ajouté à un acide ou une base décrit(e) précédemment. Préférentiellement, le fluide de l'étape de trempage (1) peut être choisi parmi:
- une solution aqueuse acide oxydante comprenant un mélange d'une solution d'acide acétique ou et d'un oxydant tel que le peroxyde d'hydrogène, ou une solution aqueuse acide comprenant le bromure d'hydrogène, l'acide sulfurique ou l'acide phosphorique ;
- une solution aqueuse basique oxydante comprenant un mélange d'une solution basique telle que l'hydroxyde de sodium, un liquide aqueux comprenant de la monoéthanolamine, ou de l'hydroxyde de potassium avec un oxydant tel que le chlorite de sodium.

Le fluide peut également être un liquide ionique et/ou un « organisme biologique » tel qu'une enzyme, une bactérie, un microbe ou un champignon.

Par « liquide ionique », on entend selon l'invention toute solution de sel organique dont le point de fusion est inférieur à 100°C, étant généralement liquide à température ambiante, et ayant une faible tension de vapeur, c'est-à-dire un point d'ébullition compris entre 200°C et 400°C.

Un liquide ionique préféré selon l'invention, utilisé seul ou en mélange, est de préférence choisi parmi les liquides ioniques à cation aminé tel que les cations cholinium, imidazolium, N-méthyl-2-pyrrolidinium, pyridinium, pyrrolidinium et leurs mélanges, de préférence imidazolium. Le contre-ion est de préférence choisi parmi les anions acésulfamate, acétate, bromure, chlorure, formate, et leurs mélanges, de préférence les abions acésulfamate, acétate, bromure, formate, et leurs mélanges. De façon particulièrement préférée, le cation est de type 1-alkyl-3-alkyl imidazolium, où les alkyles comprennent, chacun indépendamment l'un de l'autre, de 1 à 6 atomes de carbone par molécule, tels que par exemple le 1-butyl-3-méthyl imidazolium ou le 1-éthyl-3-méthyl imidazolium.

Ainsi, le liquide ionique selon l'invention peut être choisi parmi l'acésulfamate de 1-éthyl-3-méthyl imidazolium, l'acétate de 1-butyl-3-méthyl imidazolium, l'acétate de 1-éthyl-3-méthyl imidazolium, le bromure de 1-butyl-3-éthyl imidazolium, le bromure de 1-butyl-3-méthyl imidazolium, le bromure de 1-éthyl-3-méthyl imidazolium, la cholinium glycine, la cholinium lysine, le N-méthyl-2-pyrrolidinium acétate, le pyridinium formate, le pyrrolidinium acétate, le pyrrolidinum formate et leurs mélanges. Des liquides ioniques encore plus préférés selon l'invention sont l'acétate de 1-butyl-3-méthyl imidazolium, l'acétate de 1-éthyl-3-méthyl imidazolium, le bromure de 1-butyl-3-éthyl imidazolium, le bromure de 1-butyl-3-méthyl imidazolium, le bromure de 1-éthyl-3-méthyl imidazolium, et leurs mélanges.

Le liquide ionique peut également être un liquide ionique issu d'acide aminé comme la cholinium glycine ou la cholinium lysine. Un tel composé présente l'avantage d'un plus faible impact sur l'environnement.

Le liquide ionique peut également être synthétisé à partir d'une molécule issue de l'une des étapes du procédé de traitement selon l'invention, notamment l'étape de trempage (1). Cela permet avantageusement d'optimiser les sous-produits générés au cours dudit procédé. Ainsi, on peut citer des liquides ioniques synthétisés à partir d'aldéhydes aromatiques issus de la lignine ou d'hémicelluloses, tels la vanilline, la p-anisaldéhyde et le furfural, modifiés chimiquement, notamment pour y insérer des atomes nucléophiles d'azote. L'avantage d'utiliser un liquide ionique est, outre la facilité d'utilisation d'un tel produit au sein du procédé de traitement selon l'invention, de pouvoir le réutiliser une fois qu'il est extrait en étape de lavage (2) et débarrassé des composants dissouts telle la lignine et de tout autre produit y compris tout autre fluide organique de lavage.

Toute enzyme, ou tout mélange d'enzymes, appelé « cocktail d'enzymes », tout organisme biologique, tel que toute bactérie, tout microbe ou tout champignon qui peut faciliter la dégradation de la lignine au sein du matériau et donc conduire à la délignification partielle de ce matériau est également apte à être utilisé dans le cadre de l'invention.

Les enzymes, les bactéries, les microbes ou les champignons sont généralement véhiculé(e)s par un fluide, qui est le plus souvent un liquide, et plus généralement une solution. Ce fluide porteur peut être lui-même transporté par un autre fluide, qui présente des caractéristiques différentes, l'ensemble formant ainsi le plus souvent un système complexe, miscible, micellaire ou bi-phasique.

L'enzyme peut être une laccase, une peroxydase, une lignase ou une ATPase. Parmi les ATPases, on peut citer la « copper-exporting P-type ATPase A » (copA). Parmi les peroxydases, on peut citer les « dye-decolorizing peroxidases » dont celles de type B (Dyp-B type), de type P (Dyp-P type) et de type 2 (Dyp-2 type). Elles sont seules ou sous forme de mélange d'enzymes.

De telles enzymes peuvent être sécrétées par un champignon en culture tel que le « white-rot fungi ».

Le rôle des enzymes peut être double. En effet, la délignification partielle est « assistée » si l'action enzymatique est celle du fluide organique de lavage. Elle est « complétée » si l'action enzymatique accompagne l'action du fluide organique de lavage, en réduisant les éléments solvatés dissouts issus de la lignine du matériau ligno-cellulosique en éléments de plus faibles poids moléculaires.

Au moins un champignon peut également être utilisé. Il est à noter dans ce cas que les germes de champignons sont actifs dans le temps et développent des filaments de mycélium au sein des cellules végétales.

Un autre mode de réalisation préféré de l'étape de trempage (1) concerne l'utilisation d'au moins un fluide supercritique le plus souvent en mélange.

Par « fluide supercritique », on entend un fluide à l'état supercritique. L'état supercritique est un état dans lequel l'angle de contact du composé avec un substrat est égal à zéro, ce qui implique que le composé mouille complètement son substrat : de ce fait, le fluide supercritique permet d'aider le matériau ligno-cellulosique à être rempli par le ou les autres composés de l'étape de trempage (2) avec lequel il forme un système complexe.

Le fluide supercritique peut être choisi parmi le dioxyde de carbone, l'eau, les alcènes à bas poids moléculaire (c'est-à-dire à nombre d'atomes de carbone d'au moins 1 et strictement inférieur à 5) tel que l'éthylène ou le propylène, les alcanes à bas poids moléculaire (c'est-à-dire à nombre d'atomes de carbone d'au moins 1 et strictement inférieur à 5) tel que le méthane, l'éthane, le propane, et leurs mélanges ; les alcools à bas poids moléculaire (c'est-à-dire à nombre d'atomes de carbone d'au moins 1 et strictement inférieur à 5) tel que le méthanol ou l'éthanol, l'acétone, l'ammoniaque, le chloroforme, le chlorotrifluorométhane, l'oxyde nitreux, le trichlorofluorométhane, et leurs mélanges.

Il est toutefois préféré l'emploi de fluide dont l'empreinte carbone est minime, comme l'eau ou le dioxyde de carbone. L'état supercritique du dioxyde de carbone peut être atteint par des conditions relativement douces, c'est-à-dire au-delà de 31 °C et de 7,4 MPa (74 bars). Les conditions supercritiques sont plus difficiles à atteindre pour l'eau (au-delà de 374,3°C et de 22,1 MPa, soit 221 bars) : l'eau peut également être utilisée dans un état plus accessible, proche de l'état supercritique, appelé état sub-critique, tout aussi préféré.

Le fluide de l'étape de trempage (1) peut être également choisi parmi:
- une solution aqueuse comprenant un mélange de chlorure de sodium et d'hydroxyde de sodium, ou un liquide aqueux comprenant de la monoéthanolamine, ou une solution basique comprenant KOH (pour une délignification alcaline) ;
- une solution aqueuse comprenant un mélange d'acide acétique et de peroxyde d'hydrogène, ou une solution acide comprenant HBr, H₂SO₄ ou H₃PO₄ (pour une délignification acide) ;
- un fluide comprenant au moins une enzyme, éventuellement en présence d'au moins un liquide ionique ou en présence d'au moins un liquide ionique et d'au moins un co-solvant (pour une délignification enzymatique) ;
- un liquide ionique pur généralement issu de la matière végétale (pour une délignification par liquide ionique pur) ;
- un liquide ionique contenant une ou plusieurs enzymes en solution (pour une délignification par liquide ionique assistée/complétée par action enzymatique) ;
- un liquide ionique en mélange avec au moins un solvant miscible avec le liquide ionique, tel que l'éthanol (pour une délignification de type Organosolv assistée par liquide ionique ; dans ce cas le liquide ionique peut être minoritaire par rapport à l'autre ou aux autres solvant(s) miscible(s) de ce mélange) ;
- un liquide ionique en mélange avec au moins un solvant miscible contenant une ou plusieurs enzymes en solution ;
- un système bi-phasique, dont l'une des phases est constituée d'un liquide ionique, pur ou mélangé avec au moins un solvant miscible, tel que l'éthanol, et l'autre phase est constituée d'un fluide supercritique, tel que le CO₂ (pour une délignification par fluide supercritique assistée par liquide ionique pur ou mélange) ;
- un système bi-phasique, dont l'une des phases est constituée d'un liquide ionique, pur ou mélange avec au moins un solvant miscible, et l'autre phase est constituée d'un fluide supercritique, contenant en outre une ou plusieurs enzymes en solution dans la phase contenant le liquide ionique (pour une délignification par fluide supercritique assistée par liquide ionique pur ou mélange et assistée/complétée par action enzymatique) ;
- toute solution d'un composé pur ou d'un mélange de composés, contenant au moins une enzyme ; et leurs mélanges.

Le premier composé de chaque élément de la liste précédente est généralement présent majoritairement c'est-à-dire à au moins 50% en poids. Tout autre composé cité et présent de façon minoritaire est différent de ce premier composé.

Selon un mode de réalisation particulièrement préféré, le fluide de l'étape de trempage (1) est un liquide de délignification qui comprend en outre au moins un agent de polarité choisi dans le groupe formé par l'éthanol, l'éthylène glycol, le méthyl éther, la N-méthyl pyrrolidone, les dioxanes, le diméthylformamide, le diéthylène glycol, le diméthyl éther de diéthylène glycol, la pyridine, la n-butylamine, la pipéridine, la morpholine, la 4-picoline, la 2-picoline, la diéthylamine, l'aniline, l'acétone, le méthanol, et leurs mélanges, ainsi qu'éventuellement au moins un tensioactif choisi dans le groupe formé par les tensioactifs ioniques tels que cationiques, anioniques et zwitterioniques et les tensioactifs non-ioniques, et leurs mélanges.

La présence d'un tel agent de polarité permet avantageusement une meilleure pénétration du composé de remplissage au sein de la structure de lignine et de cellulose du matériau, au cours de l'étape de remplissage (3) subséquente. Selon un mode de réalisation particulièrement préféré, le fluide de l'étape de trempage (1) comprend en outre au moins un tensioactif.

Le tensioactif est généralement choisi parmi les tensioactifs anioniques tels que ceux à base d'esters de sulfate, de sulfonate, de carboxylate ou de phosphate ; les tensioactifs cationiques tels que les sels d'ammonium quaternaire ; les tensioactifs non-ioniques tels que les tensioactifs à base d'oxyde de polyéthylène et/ou d'oxyde de polypropylène, tels que par exemple la famille des produits commerciaux Pluronic^{®} et Tween^{®}, ou à base de chaîne d'acide gras par exemple la famille des produits commerciaux Span^{®} et le sucre ; et les tensioactifs zwitterioniques tels que les oxydes d'amine, par exemple l'oxyde de lauramine, les bétaïnes, les alkyl amido bétaïnes, les sulfobétaïnes et les dérivés de l'imidazoline ; et leurs mélanges. Les tensioactifs dérivés de la lignine, tels que ceux obtenus par sulfonation de la lignine, peuvent également être utilisés. Enfin, le fluide de trempage peut comprendre au moins un catalyseur de type N-oxyl, tel que les tétrapropylammonium terruténate (TPAP), 2,2,6,6-tetraméthylpiperidine-1-oxyl (TEMPO), ou 2-azaadamantane N-oxyl (AZADO) et leurs dérivés.

Par exemple, l'étape de trempage (1) peut par exemple être effectuée sous vide à l'aide d'une solution organique aqueuse comportant de 5 à 10 % de chlorure de sodium et de 0,01 à 0,5 % d'hydroxyde de sodium, à température de 50 à 90°C et pendant 2 à 10 heures, par exemple à 70°C pendant 5 heures.

### Etape de lavage (2)

L'étape de lavage (2) permet l'extraction de la lignine et d'autres composés éventuels dissouts présents dans le matériau ligno-cellulosique à la suite de l'étape de trempage (1). La lignine sera présente dans le fluide de trempage, en fin d'étape (2), le plus souvent sous forme de fragments. En plus des molécules issues de la dégradation de lignine, des produits de dégradation d'autres composants du matériau ligno-cellulosique peuvent se retrouver dans le fluide organique de l'étape de lavage (2), telles des molécules issues de la dégradation des parties amorphes de la cellulose, des sucres simples issus des hémicelluloses périphériques, voire certains extractibles. Comme explicité précédemment, cette étape (2) sert notamment à éviter que la présence des composés dissouts au sein de la structure ne limite le remplissage des espaces existants à l'état natif et ceux créés au cours de l'étape de trempage (1) par le composé de remplissage au cours de l'étape de remplissage (3). Elle peut être réalisée en une ou plusieurs fois, c'est-à-dire en plusieurs étapes, jusqu'à atteindre une extraction satisfaisante, voire totale, par rapport à la quantité de lignine dissoute à l'étape de trempage (1).

Par exemple, si l'extraction est réalisée au moyen de sous-étapes successives de lavage par un fluide organique liquide, il est procédé à l'extraction jusqu'à l'obtention d'un fluide organique de lavage sensiblement exempt de lignine et des autres composés dissouts. Les paramètres physico-chimiques, tels la température et/ou le pH, du fluide organique employé peuvent être ajustés d'une sous-étape de lavage à une autre. De la même façon, si le fluide organique de l'étape de lavage (2) est un mélange de composés, les quantités respectives de ces composés peuvent être ajustées d'une sous-étape de lavage à une autre. Au cours de l'étape de lavage (2), les résidus de la délignification sont plus facilement extraits des pores du bois par agitation du fluide organique de l'étape de lavage (2), ou par action mécanique ou ondulatoire, telle que sonique.

La lignine dissoute qui est extraite de la structure de matériau ligno-cellulosique joue un rôle essentiel dans le cadre du procédé de l'invention. Comme expliqué précédemment, d'autres composés peuvent être dissouts et extraits, voire simplement extraits, du matériau ligno-cellulosique au cours des étapes de trempage (1) et de lavage (2).

Le fluide organique de l'étape de lavage (2) est préférentiellement un fluide organique qui peut être tout fluide précédemment cité à l'étape (1).

Cependant, le fluide organique préféré est un liquide choisi dans le groupe formé par l'acétone, l'eau, l'éthanol, l'hexane, l'heptane, l'isopropanol et le toluène, et leurs mélanges, de façon encore plus préférée choisi dans le groupe formé par l'éthanol, l'hexane, l'isopropanol, l'heptane et leurs mélanges.

L'éthanol est particulièrement préféré car il permet de protéger la cellulose de façon à ce qu'elle soit préservée lors des étapes (3) et (4) ultérieures.

Par exemple, l'étape de lavage (2) peut être effectuée sous vide à l'aide d'un bain d'éthanol à 60°C pendant 4 heures. L'étape de lavage (2) peut aussi être effectuée par plusieurs bains successifs d'éthanol puis d'hexane.

De façon avantageuse, le fluide organique peut être recyclé après son utilisation durant l'étape de lavage (2).

Selon le procédé de l'invention, la lignine dissoute récupérée dans le fluide organique de l'étape de lavage (2) est de préférence utilisée dans un procédé de valorisation de la lignine, généralement sur le plan industriel, pour la fabrication d'un matériau de construction ou d'un matériau utilisé en aéronautique ou d'un matériau d'emballage ou d'un biocarburant ou d'un composé pharmaceutique ou d'un composé chimique. On peut ainsi utiliser la lignine pour la valoriser en fibre de carbone (par combinaison aromatique), béton fibré, emballages, biocarburants (par méthanisation), médicaments, et composants chimiques (acide férulique notamment) et arômes (vanilline), mais également pour des applications à plus haute valeur ajoutée telle que l'extraction de molécules aromatiques en tant que synthons de base dans des domaines variés de la chimie (polymères, synthèse de précurseurs...). La lignine peut également être utilisée par le biais de différentes pâtes (kraft, pâte à papier, pâte alcaline, pâte au sulfite...) dans le domaine de l'emballage. Cela confère au procédé selon l'invention un caractère de procédé écologique (ou procédé « *green* »), en évitant au maximum la production de déchets non recyclables.

Il est ainsi possible de procéder dans le cadre de l'invention, ainsi qu'il a été envisagé dans la littérature, à des utilisations de la lignine ainsi extraite du fluide organique de l'étape de lavage (2) dans les domaines aussi variés que :
- le bioraffinage (produits de combustion, gaz synthétique, bioéthanol) ;
- les produits de spécialités chimiques biologiques (dérivés aromatiques tels que vanilline, benzène, xylène, DMBQ (2,6-diméthoxy-1,4-benzoquinone), syringaldéhyde, syringol, acide vanillique, acide sinapinique, p-hydroxybenzaldéhyde, 3-éthylphénol, 2-méthylphénol, 3-méthoxycatéchol, acide férulique ; gaz tels que dioxyde de carbone, monoxyde de carbone, méthane ou méthanol) ;
- les composés de spécialité (fibre de carbone de basse qualité ou de qualité moyenne pour applications tels que aérospatiale, automobile, motocycles, avions, moulins à vent, freins, canne à pêche ... ; additifs pour asphalte ; additifs pour ciment ; et agents émulsifiants) ; et
- les matériaux divers et variés (produits plastiques tels que les résines phénoliques, les résines époxy, les mousses lignine-polyuréthane ; produits caoutchouteux tels que les revêtements élastomères lignine-polyuréthane ; produits adhésifs ; produits pour panneaux de bois de type aggloméré ; produits de nutrition animale tels que comprimés ou liants ; produits inflammables tels que allumettes ou liquides pour barbecue).

De même, les composés extraits autres que la lignine sont de préférence utilisés dans un procédé de valorisation, tel un procédé de valorisation des sucres ou de molécules aromatiques ou fonctionnelles, généralement sur le plan industriel. Pour certaines de ces applications, ces composés extraits doivent subir des étapes de post-traitement, tels des purifications et/ou des fractionnements.

### Etape de remplissage (3)

L'étape de remplissage (3) est une étape au cours de laquelle le remplissage (c'est-à-dire l'action de faire pénétrer dans la structure partiellement délignifiée) de la structure partiellement délignifiée par le composé de remplissage est effectué. Elle peut être réalisée en une ou plusieurs fois. Le composé de remplissage doit le plus souvent avoir la propriété de se lier aux fibres du matériau ligno-cellulosique encore présentes au sein de la structure, par ancrage chimique ou physico-chimique.

Diverses techniques sont possibles pour ce remplissage, ainsi qu'il est connu de l'homme du métier. En général, ces techniques sont de type en séries (remplacement d'un fluide par un autre fluide par étape au cours d'une série, répétée plusieurs fois, d'imprégnations successives, les concentrations de chaque fluide en composé de remplissage augmentant de façon incrémentale, telle qu'exponentielle), par imprégnation, par injection (par le vide de type RTM ou RTM Light pour *« Resin Transfer Molding »*)*,* par infusion (RIFT pour « *Resin Infusion under Flexible Tooling »*)*,* sous vide ou sous pression, dans un réacteur ou un autoclave ou un four sous vide, ou tout autre appareil que l'homme du métier sait apte à effectuer cette étape.

La mise au point des conditions de remplissage est à la portée de l'homme du métier.

Dans le cas préféré selon l'invention de l'utilisation d'un autoclave, il peut être recommandé d'alterner des phases sous vide avec des phrases sous pression pour bien imprégner le matériau ligno-cellulosique. En effet, cette alternance force avantageusement le composé de remplissage à pénétrer dans le matériau du fait de la différence de pression ainsi créée.

Dans un exemple de réalisation, l'étape de remplissage (3) comporte une étape d'imprégnation sous pression de la structure partiellement délignifiée par une solution comprenant le composé de remplissage. Cette pression est généralement de 0,1 à 2,5 MPa.

L'étape de remplissage (3) peut aussi être effectuée sous atmosphère sans oxygène, soit sous vide soit en présence de diazote, pendant une durée de quelques minutes à 24 heures, par exemple et de préférence de 20 à 24 h par 500 mL de volume de composé de remplissage, le volume étant adapté pour assurer le remplissage de la structure prenant en compte le retrait de l'oxygène présent dans les cavités du matériau ligno-cellulosique et la possible élaboration du composé de remplissage en cas de mise sous vide et/ou de chauffage. L'étape de remplissage (3) du procédé de traitement selon l'invention peut être effectuée essentiellement selon deux modes de réalisation. Ces deux modes peuvent être adaptés en fonction du matériau ligno-cellulosique utilisé.

Dans un premier mode de réalisation, le composé de remplissage est un polymère ou un co-polymère, formulé ou non.

Dans ce cas, le polymère ou co-polymère est généralement à l'état liquide aux conditions de pression et de température de l'étape de remplissage (3), pour réaliser l'étape de remplissage (3) par trempage de la structure partiellement délignifiée dans le polymère ou co-polymère liquide.

De préférence le polymère ou co-polymère est thermoplastique, et la température de l'étape de remplissage (3) est supérieure à sa température de transition vitreuse. Dans ce cas, l'étape de finition (4) consiste en une mise au repos sous température inférieure à la température de transition vitreuse du polymère ou co-polymère. Cela suppose que le polymère ou co-polymère a généralement une température de transition vitreuse supérieure à la température ultérieure d'utilisation, typiquement supérieure à environ 25°C (température ambiante). De préférence, le polymère ou co-polymère est choisi dans le groupe formé par les polyacrylates, les polyamides (tels que les Nylons^{®} de DuPont), les polyesters, les fluoropolymères (tel que le Teflon^{®} de DuPont), le polyéthylène, le polypropylène, le polybutène, le polystyrène, le poly(oxyde de phénylène), le poly(chlorure de vinyle), le poly(chlorure de vinylidène), le polycarbonate, le poly(acide lactique), les polyéthersulfones, les polyétherimides, les polyaryléthercétones ; ainsi que dans le groupe formé par les polymères et co-polymères, non énumérés ci-dessus et obtenus à partir des monomères du second mode de réalisation dont la liste est donnée plus loin.

De la cellulose, de l'amidon, des polypeptides, des protéines, ainsi que des polymères dérivés de ces composés, tel l'acétate de cellulose ou l'acétate d'amidon, formulés ou non, peuvent être utilisés dans ce mode de réalisation d'utilisation.

Dans un second mode de réalisation, le composé de remplissage de l'étape de remplissage (3) est un monomère polymérisable présent dans une solution monomérique ou dans une formulation monomérique aux conditions de pression et de température de l'étape de remplissage (3). De préférence le composé de remplissage de l'étape de remplissage (3) est un monomère polymérisable présent dans une solution monomérique aux conditions de pression et de température de l'étape de remplissage (3), la solution monomérique comprenant en outre au moins un catalyseur. Un tel monomère polymérisable conduit généralement à l'obtention d'un (polymère) thermoplastique ou d'un (polymère) thermodurcissable.

Les composés de remplissage peuvent comprendre des monomères, sous forme des solutions monomériques voire de formulations monomériques. Les solutions et formulations monomériques peuvent être des produits commerciaux connus de l'homme du métier.

De façon générale, il est recommandé d'éviter d'utiliser un composé de remplissage présentant le risque de générer des sous-produits volatils et/ou non liés à la structure du matériau composite.

On entend par « solution monomérique » un mélange d'un ou plusieurs monomères, avec ou sans agent activant la polymérisation de ces monomères. On entend par « formulation monomérique » une solution monomérique contenant au moins un composé supplémentaire. Un tel composé supplémentaire est généralement choisi parmi les oligomères, les polymères, les copolymères en ce qui concerne les thermoplastiques, ou les pré-polymères et les pré-co-polymères accompagnés d'au moins un durcisseur pour les thermodurcissables. Ce composé supplémentaire peut également être au moins un agent permettant la polymérisation tel qu'un initiateur (par exemple un initiateur biosourcé comme l'épichlorydrine, des acides carboxyliques, des amines, et leurs mélanges), un catalyseur, de façon préférée thermiquement activable ou dégradable par rayonnement, une charge, un tensioactif, un retardateur ou un inhibiteur de polymérisation, ou un agent de transfert de chaînes, ou un mélange de ces composés.

Le plus souvent, la charge est organique ou minérale. La charge minérale est généralement choisie dans le groupe formé par les alumines, les argiles, les poudres de carbone, les billes de verre, les diamants, le gypsum, le calcaire, le mica, la perlite, le quartz, le sable, le talc, la silice, le titane et leurs mélanges, de préférence choisie dans le groupe formé par les argiles, les diamants, les billes de verre, le gypsum, le calcaire, le mica, la perlite, le quartz, le sable, le talc et leurs mélanges. La charge minérale peut être fonctionnalisée pour accroitre sa dispersion et sa stabilité dans la formulation monomérique de remplissage. Au moins un tensioactif peut être ajouté à cette fin également.

Le catalyseur est choisi de façon à catalyser, de préférence, une réaction de polymérisation radicalaire. Ce choix dépend généralement, ainsi qu'il est connu de l'homme du métier, outre du monomère, du mode de polymérisation et de son contrôle.

Le catalyseur est de préférence choisi dans le groupe formé par les composés de type azo de formule R-N=N-R' où R et R' sont des groupes alkyles comprenant éventuellement au moins une fonction supplémentaire, tel que l'azoisobutyronitrile, les peroxydes, les composés alkyl (comprenant généralement de 1 à 6 atomes de carbone par molécule) halogénés (c'est-à-dire comprenant un atome d'halogène qui est du chlore, du brome, de l'iode ou du fluor), les nitroxydes, les composés thio carbonyl thio. Mais tout autre catalyseur connu de l'homme du métier est également envisageable, tel que le peroxyde de cétone, le peroxyde d'hydrogène le peroxycétal, l'hydroperoxyde, le peroxyde de dialkyle, le peroxyde de diacyle, des peroxyesters, des peroxy dicarbonates, tels que le peroxyde de benzoyle, le méthyl éthyl cétone peroxyde, le cumène hydroperoxyde, le persulfate de potassium, le peroxynéodécanoate tert-butyle, le peroxypivalate de tert-butyle, le peroxy-2-éthylhexanoate de tert-butyl, le peroxyisobutyrate de tert-butyle, le 1,1-bis-tert-butylperoxy-3,3,5-triméthylcyclohexane, le peroxylaurate de tert-butyle, le peroxyisophthalate de tert-butyle, le peroxyacétate de tert-butyle, le peroxybenzoate de tert-butyle, le peroxyde de dicumyle et le peroxyde de di-tert-butyle et leurs mélanges.

Selon un mode de réalisation, la solution monomérique ou la formulation monomérique de l'étape de remplissage (3) peut comprendre en outre au moins un agent plastifiant qui peut être tout solvant, tout oligomère, toute charge, visant à diminuer la viscosité du composé de remplissage et ainsi de permettre avantageusement une meilleure pénétration du composé de remplissage au sein de la structure ligno-cellulosique du matériau.

Si l'agent plastifiant est un solvant, celui-ci est généralement choisi de telle sorte qu'il s'évapore en grande partie à température ambiante de façon à limiter l'émission de composé organique volatile pendant la durée de vie de la structure de matériau composite. En effet, l'utilisation de solution monomérique ou de formulation monomérique contenant un solvant peu volatil n'est pas préféré dans le cadre de la présente invention dans la mesure où l'imprégnation d'un solvant dans la structure du matériau ligno-cellulosique peut conduire à la création de molécules non greffées et emprisonnées dans la structure de matériau composite qui pourraient être progressivement relâchées. Si l'agent plastifiant est un oligomère, celui-ci est choisi de telle sorte qu'il s'ancre durablement au sens de la structure afin d'éviter tout relargage ultérieur.

Au moins un agent de préservation de la structure du matériau composite final, tel un absorbeur de rayons UV, peut également être ajouté à la formulation monomérique de remplissage. Cela permet d'améliorer la tenue de celle-ci dans la structure. On peut choisir un tel agent parmi des composés chromophores tels que l'anthraquinone, des composés à base de motif benzophenone ou benzotriazole, d'acrylate de diphényl, et tout ou partie des composés extraits au cours de l'une des étapes de trempage (1) ou de lavage (2), et leurs mélanges. Au moins un composé ignifuge, fongicide, bactéricide ou insecticide peut également être ajouté pour renforcer les propriétés de la structure de matériau composite final. Les composés ignifuges comprennent le trihydrate d'aluminium, le trioxyde d'antimoine, le pentoxyde d'antimoine et les composés oragnophosphorés, et tout ou partie des composés extraits au cours de la phase de trempage (1) ou lavage (2), et leurs mélanges.

Selon un mode de réalisation, la formulation monomérique de remplissage comprend en outre au moins un agent de polarité choisi dans le groupe formé par l'éthanol, l'éthylène glycol, le méthyl éther, la N-méthyl pyrrolidone, les dioxanes, le diméthylformamide, le diéthylène glycol, le diméthyl éther de diéthylène glycol, la pyridine, la n-butylamine, la pipéridine, la morpholine, la 4-picoline, la 2-picoline, la diéthylamine, l'aniline, l'acétone, et le méthanol.

La présence d'un tel agent de polarité permet avantageusement une meilleure pénétration du composé de remplissage au sein de la structure ligno-cellulosique.

Le monomère est de préférence choisi parmi les monomères issus du pétrole (appelés pétro-sourcés) parmi lesquels les méthacrylates, tels que le méthacrylate d'éthyle, le méthacrylate de méthyle, le méthacrylate de propyle, le méthacrylate de butyle, le méthacrylate d'hexyl, le méthacrylate d'octyl, le méthacrylate d'octyl, le méthacrylate lauryl, le méthacrylatede 2-éthylhexyl, le méthacrylate de cyclohexyl ; les acrylates tel que l'acrylate d'éthyle ; les phtalates tels que les dialkylphtalates où l'alkyle comprend par exemple de 1 à 6 atomes de carbone ; les nitriles tel que l'acrylonitrile ; le styrène et les dérivés styréniques tel que l'α-méthylstyrene, le chorostyrène, le styrène, le t-butyl styrène, le vinyltoluène ; les composés vinyliques tel que l'acétate de vinyle, le chlorure de vinyle et le proprionate de vinyle ; les composés insaturés contenant un groupe carboxyl tels que l'acide acrylique, l'acide fumarique, l'acide maléique, l'acide méthacrylique ; les composés éthyléniques tel que l'éthylène glycol ou l'oxyde d'éthylène ; le butadiène ; l'isoprène ; les monomères insaturés contenant un atome de nitrogène, tels que l'acrylamide, l'acrylonitrile, la N-butoxydiméthylacrylamide, la vinylpyridine ; et leurs mélanges. Ces monomères conduisent généralement à la formation de polymères thermoplastiques.

On peut également citer des monomères conduisant à la formation de polymères thermodurcissables comme des composés pétrosourcés parmi lesquels des précurseurs de résine thermodurcissable tels que des précurseurs de résines époxy, comme les pré-polymères époxydés dérivés de bisphénol tel que le bisphénol A diglycidyl éther (BADGE en français plus connu sous son acronyme anglais DGEBA), ou tout bisphénol époxydé, ainsi que le méthacrylate de glycidyl ou l'éther d'allyl glycidyl, les précurseurs de résines oxétane, les précurseurs de résines phénoliques, les précurseurs de résines urée, les précurseurs de résines acryliques; et leurs mélanges. Dans ce cas, au moins un durcisseur est généralement présent dans le composé de remplissage. Le durcisseur peut être tout durcisseur de résine thermodurcissable connu de l'homme du métier telle qu'une amine aliphatique, comme l'isophoronediamine, ou cyclique, un acide carboxylique, un anhydride ou un liquide ionique.

On peut citer également des monomères biosourcés conduisant à la formation de polymères thermoplastiques ou thermodurcissables, identiques aux monomères issus du pétrole ou bien différents, parmi lesquels les tannins, comme les flavan-3-ol (afzelechine, gallocatéchine, catéchine) et les terpènes ; le resvératrol ; le résorcinol ; le glycérol et les dérivés du glycérol comme l'épichlorydrine, les isomères du propanediol et l'acide glycolique ; les dérivés des sucres (isosorbide, sorbitol polyglycidyl éther, tréhalose, D-glyceraldéhyde, D-thréose, D-érythrose, D-arabinose, D-ribose, D-mannose, D-glucose) ; les dérivés du furfural (généralement issu de la dépolymérisation acide de l'hémicellulose) ; les dérivés de l'acide maléique ou fumarique ; les dérivés des acides lactique et formique ; les monomères issus d'huile végétale et de corps gras (noix de cajou, carthame, colza, lin, olive, soja, huile de ricin) tels que l'acide sébacique (ricin), la cardanol (noix de cajou), l'acide linoléique (issu du lin), l'acide vernonia (issu de graines de vernonia) ; les acides hydroxyalcanoïques, comme ceux dérivés des acides formique, lactique et sébacique; le bio-éthylène (ou éthylène biologique) ; le bio-éthylène glycol (ou éthyène glycol biologique) ; le bio-propylène (ou propylène biologique) ; le bio-1,4-butanediol (ou 1,4 butanediol biologique); les dérivés de la lignine, tel que l'acide téréphtalique, l'acide gallique, la vanilline ; les dérivés de la vanilline comme la vanillylamine, la methoxyhydroquinone de diglycidylether, la triglycidylether de vanillylamine ; et leurs mélanges, tels que des monomères issus d'une combinaison de dérivés de sucre et de corps gras.

Par « biosourcé » on entend qualifier une molécule dont tout ou partie des atomes constitutifs sont issus d'une ressource provenant de la biomasse, et ne résultant pas de la transformation anthropique d'une ressource fossile.

On peut enfin citer des monomères biosourcés hybrides conduisant à la formation de polymères thermoplastiques ou thermodurcissables, identiques aux monomères biosourcés. On entend par composé « biosourcé hybride » un composé biosourcé dont une partie de la structure a réagi avec une molécule dont les atomes ne proviennent pas de ressources issues de la biomasse.

Par « dérivé de X », on entend selon l'invention composé synthétisé à partir du composé X par une courte séquence de réactions chimiques gardant essentiellement l'identité (c'est-à-dire la structure chimique principale) du composé X, tel qu'un ajout d'une fonction ou une augmentation de la longueur de chaîne carbonée (i.e. un ajout de chaîne carbonée) ou une oxydation ou une réduction ou une substitution nucléophile ou une ouverture de cycle.

De façon encore plus préférée, la solution monomérique ou formulation monomérique, de préférence la solution monomérique, comprend de préférence au moins un monomère choisi parmi :
- les monomères issus du pétrole parmi lesquels les méthacrylates, tels que le méthacrylate de butyle, le méthacrylate de méthyle, le méthacrylate d'éthyle, le méthacrylate de glycidyl , le méthacrylate de tri-n-butyl étain ; les phtalates tels que les dialkylphtalates ; les nitriles tel que l'acrylonitrile ; le styrène et les dérivés styréniques tel que le t-butyl styrène et le chorostyrène ; les composés vinyliques tel que l'acétate de vinyle, le chlorure de vinyle et le proprionate de vinyle ; les composés éthyléniques tel que l'éthylène glycol ou l'oxyde d'éthylène ; le butadiène ; l'isoprène ; et
- les monomères biosourcés parmi lesquels les terpènes ; le glycérol et les dérivés du glycérol obtenus après réaction avec au moins un composé parmi l'épichlorydrine, les isomères du propanediol et l'acide glycolique ; les dérivés des sucres ; les dérivés du furfural (généralement issu de la dépolymérisation acide des hémicelluloses) ; les dérivés des acides lactique et formique ; les monomères issus de l'huile de ricin (ou « castor oil ») tel que l'acide sébacique ; les acides hydroxyalcanoïques, comme ceux dérivés des acides formique, lactique et sébacique; le bio-éthylène (ou éthylène biologique) ; le bio-éthylène glycol (ou éthylène glycol biologique) ; le bio-propylène (ou propylène biologique) ; le bio-1,4-butanediol (ou 1,4-butanediol biologique); les dérivés de la lignine, tel que l'acide téréphtalique ; et leurs mélanges.

Tout mélange des composés ci-avant cités est également préféré selon l'invention.

L'avantage d'utiliser des monomères biosourcés est qu'il est possible soit de les récupérer ultérieurement lors du recyclage du matériau composite en fin de vie soit de faciliter la destruction du matériau composite en fin de vie. Cela permet donc d'obtenir un matériau composite partiellement ou totalement recyclable, ce qui confère au procédé selon l'invention un caractère de procédé à développement durable voire écologique (ou procédé « green »).

Selon un mode de réalisation, le composé de remplissage est constitué de deux monomères qui conduisent à la fabrication d'un polymère thermodurcissable dans l'étape de finition (4), qui consiste en une polymérisation et une réticulation. Un exemple de second mode de réalisation est que l'étape de remplissage (3) comporte une étape de diffusion comprenant une première sous étape d'immersion de la structure partiellement délignifiée dans un mélange de 50% de la solution monomérique et 50% d'un solvant, par exemple de l'éthanol, puis une deuxième sous étape d'immersion de la structure issue de la première sous étape dans un mélange de 75% de la solution monomérique et 25% d'un solvant, par exemple de l'éthanol, puis une troisième sous étape d'immersion de la structure issue de la deuxième sous étape dans un mélange de 100% de la solution monomérique, puis une quatrième sous étape d'immersion de la structure issue de la troisième sous étape dans un mélange de 100% de la solution monomérique et de catalyseur, chaque sous étape d'immersion étant effectuée à température ambiante de quelques minutes à 24 heures, par exemple pendant 24 heures.

Selon un mode de réalisation, l'étape de remplissage (3) peut avantageusement être effectuée en présence d'un gaz neutre tel que le diazote ou l'argon sous pression ou bien d'un composé supercritique (i.e. à l'état supercritique).

Le catalyseur est tel que décrit précédemment.

Le gaz neutre permet avantageusement d'éviter l'évaporation du composé de remplissage au cours des étapes de remplissage (3) et de finition (4), ainsi que d'éviter le contact dudit composé avec l'air ambiant, et en particulier l'oxygène de l'air.

Selon un mode de réalisation, le monomère est tel qu'une fois polymérisé, il possède sensiblement la même densité optique que celle de la cellulose. L'indice de réfraction du polymère ainsi obtenu est typiquement compris dans une fourchette de 1,35 à 1,70, plus précisément entre 1,44 et 1,65, et encore plus précisément entre 1,52 et 1,60, et est souvent pris autour de 1,47, 1,53, 1,56 ou 1,59, avec une variation possible autour de ces valeurs de l'ordre de 10%. Il peut également être, dans un mode de réalisation différent, typiquement compris dans une fourchette de 1,40 à 1,60, par exemple d'environ 1,47.

### Etape de finition (4)

L'étape de finition (4) est une étape au cours de laquelle le composé de remplissage de la structure partiellement délignifiée remplie issue de l'étape de remplissage (3) est fixé dans la structure, ce qui permet d'obtenir une structure de matériau composite formée d'un réseau tridimensionnel de composé de remplissage transformé incorporé dans un réseau de cellulose et de lignine. Le « composé de remplissage transformé » est le composé obtenu à l'issue de l'étape de finition (4).

Elle s'effectue de différentes façons, en particulier en fonction du mode de réalisation de l'étape de remplissage (3). Elle peut être effectuée en une ou plusieurs fois. Elle peut être effectuée selon un mode stationnaire ou par paliers. Cette étape de finition (4) est donc une étape de fixation du composé de remplissage, de préférence par polymérisation et/ou réticulation lorsque le composé de remplissage comporte au moins un monomère, souvent présent sous la forme d'une solution ou formulation de remplissage. Cette polymérisation et/ou réticulation s'effectue notamment de façon telle que des fibres du matériau ligno-cellulosique sont aussi liées au composé de remplissage transformé après achèvement de l'étape de finition (4) par ancrage chimique, physique ou physico-chimique.

Comme expliqué précédemment, le terme « ancrage » se rapporte à une création de liaisons moléculaires. La structuration de chaînes de polymères au sein de l'architecture du matériau ligno-cellulosique s'effectue soit par des liaisons covalentes, auquel cas un réseau chimiquement réticulé est obtenu, soit par des liaisons faibles ou des interactions, de type liaisons hydrogène, de van der Waals, auquel cas un réseau physique est obtenu, ou bien par un mélange des deux types de liaisons.

Le composé de remplissage forme ainsi un polymère qui peut ainsi appartenir à la famille des polymères thermoplastiques ou des polymères thermodurcissables. De tels polymères peuvent être choisi dans le groupe formé par les résines acryliques, les résines aminoplastes, les résines diallyl phtalate, les résines époxy telles que les résines époxy Spurr (comme par exemple le produit commercial EM300 vendu par la société Sigma-Aldrich), les résines mélamines, les résines méthacrylique, les résines oxétane, les résines phénoliques, les résines polyacétal, les résines polyamides, les résines polycarbonates aromatiques et aliphatiques, les polyesters aromatiques et aliphatiques, les résines polyfluorés, les résines polyphénylène éther, les résines polyimides, les résines polyoléfines aromatiques et aliphatiques, les résines polysulfonés, les résines styréniques et, des polyuréthane et les matériaux sol-gel inorganiques ou organiques tel que les polymères d'Ormosil (pour « organically modified silica » ou « organically modified silicates » c'est-à-dire silicates ou silices modifiés de façon organique), les silicones, et leurs combinaisons.

L'ancrage du composé de remplissage s'effectue de différentes façons, en particulier en fonction du mode de réalisation de l'étape de remplissage (3).

Ainsi, lorsque l'étape de remplissage (3) est effectuée selon le premier mode de réalisation, c'est-à-dire que le composé de remplissage est un polymère ou un co-polymère de préférence thermoplastique, l'étape de finition (4) consiste à figer (ou fixer), autant que faire se peut, le polymère ou copolymère au sein de la structure pour son utilisation ultérieure. En d'autres termes, l'étape de finition (4) consiste à mettre ledit polymère ou co-polymère dans un état physique tel qu'il ne peut pratiquement pas quitter la structure dans les conditions de température et de pression considérées. Ces conditions de température et de pression dépendent essentiellement de l'utilisation ultérieure qui sera faite de la structure de matériau composite, à savoir typiquement si elle est destinée à être placée en extérieur (auquel cas le climat de l'endroit de l'utilisation doit être pris en considération) ou en intérieur. En général, cela se traduit par une mise sous température inférieure à la température transition vitreuse du polymère ou co-polymère.

Ainsi, lorsque l'étape de remplissage (3) est effectuée selon le second mode de réalisation, c'est-à-dire que le composé de remplissage est un monomère polymérisable présent dans une solution monomérique, l'étape de finition (4) consiste à polymériser le monomère en présence du catalyseur. Cela s'effectue généralement par toute technique de polymérisation envisageable, telle que la voie thermique, la voie UV, ou la voie plasma. Le choix de la technique dépend essentiellement de la nature du catalyseur de polymérisation, ainsi qu'il est connu de l'homme du métier.

Par exemple, la solution monomérique comprend du méthacrylate de butyle et du styrène en proportion d'une part de méthacrylate de butyle pour 3 parts de styrène, et le catalyseur présent à l'étape de finition (4) est de l'azoisobutyronitrile à raison de 0,05 part. Dans ce cas, l'étape de finition (4) peut être effectuée par chauffage à température de 15°C à 80°C, par exemple de 40°C, sous vide ou sous atmosphère dénuée d'oxygène, par exemple sous atmosphère dénuée d'oxygène, pendant 20 à 50 heures, par exemple pendant environ 24 heures. Lorsque le polymère ou co-polymère obtenu est thermodurcissable, l'étape de remplissage (3) s'est effectuée à l'état liquide et à température supérieure à la plage de températures à laquelle la réticulation se met en place et ledit polymère ou co-polymère commence à durcir. Alors, l'étape de finition (4) consiste en une polymérisation puis réticulation des monomères sources du polymère thermodurcissable, à température inférieure à ladite plage de températures du polymère ou co-polymère.

Aussi il est possible de réaliser le remplissage (3) du matériau ligno-cellulosique et d'initier la précipitation (4) induite du composé de remplissage dans celui-ci de façon quasi-simultanée.

### Etapes optionnelles de post-traitement (5) et/ou (6)

Selon l'invention, le procédé de traitement peut comprendre en outre une étape de mise sous pression (5) de la structure issue de l'étape de finition (4). L'étape de mise sous pression (5) est typiquement effectuée à température de 80 à 250°C pendant 5 à 30 minutes sous pression de 0,1 à 2,0 MPa.

Cette étape de mise sous pression (5) peut être suivie d'une étape de finition de surface (ou traitement de surface) (6) de la structure issue de l'étape de mise sous pression (5). L'étape de finition de surface (6) peut typiquement être réalisée par voie chimique, par exemple au moyen d'acétate d'éthyle, ou par voie thermique et accompagnée d'une mise sous presse, auquel cas les étapes de mise sous pression (5) et de finition de surface (6) sont réalisées simultanément. Cela permet avantageusement d'aplanir les irrégularités de surface de la structure.

L'étape de finition de surface (6) peut également être réalisée sans réalisation préalable d'une étape (5). Dans ce cas elle peut être réalisée à base de traitement par vapeur avec de la vapeur d'acétone ou chlorure de méthaline.

### Structure

La structure de matériau composite selon le deuxième aspect de l'invention est de façon générale avantageusement une structure de bonne résistance au feu, accrue par rapport au matériau ligno-cellulosique avant traitement (de par sa masse volumique augmentée et de par l'absence d'air - et donc d'oxygène - dans sa structure cellulaire densifiée), imputrescible (de par l'absence d'air dans sa structure cellulaire densifiée qui ne peut donc plus interagir avec l'humidité ambiante), de durabilité améliorée par rapport au matériau ligno-cellulosique avant traitement, et qui présente des caractéristiques mécaniques de résistance à la compression et à la flexion améliorées par rapport au matériau ligno-cellulosique natif avant traitement. Ces propriétés dépendent entre autres de la nature du composé de remplissage et du matériau ligno-cellulosique natif. Selon un mode de relation préféré, la structure de matériau composite présente en majeure partie, voire en quasi-totalité, un indice de réfraction sensiblement homogène ou périodique, selon la nature du matériau ligno-cellulosique natif. Selon un mode de réalisation, la structure de matériau ligno-cellulosique composite est sensiblement transparente. Mais elle peut également être opaque.

De préférence, la structure de matériau ligno-cellulosique composite est sensiblement translucide.

On entend par « transparent » la capacité qu'a un corps visuellement homogène à laisser passer au moins 90% de la lumière incidente. Cette mesure est effectuée par rapport à la transmission lumineuse directe pour un éclairage ambiant considéré, par comparaison entre la valeur (en lux) de l'éclairage ambiant et la valeur (en lux) du flux de transmission lumineuse obtenue après passage dans la structure.

On entend par « translucide » la capacité d'un corps à laisser entre 5% et 90% de la lumière incidente. Un corps translucide peut ne pas apparaître homogène. Dans le cadre de la présente invention, certaines zones moins délignifiées de la pièce du matériau ligno-cellulosique peuvent absorber les rayons lumineux incidents selon la structure du matériau ligno-cellulosique natif ; les zones davantage délignifiées auront, elles, tendance à apparaitre plus claires et à laisser passer la lumière plus facilement que les zones moins délignifiées.

On entend par « opaque » la capacité qu'a un corps de ne laisser passer aucun rayon lumineux, par absorption ou par diffusion de la lumière au sein de sa structure. Une structure de matériau ligno-cellulosique natif est généralement un matériau opaque dans ses dimensions communes d'emploi. Si l'épaisseur de cette structure est réduite à moins de 500µm, le matériau ligno-cellulosique natif est alors sous forme de feuille fragile et flexible, peut laisser passer un rayonnement incident, est être translucide de ce fait, malgré l'absence de traitement, mais le matériau ne présente pas les autres propriétés du matériau composite final.

Les rayons lumineux traversant le matériau peuvent ou non être déviés, peuvent ou non conserver leur direction de propagation initiale après avoir traversé la structure. Cette propriété optique est avantageusement obtenue par homogénéisation de l'indice optique du composé de remplissage transformé avec celui de la cellulose (en particulier l'alpha-cellulose) révélée au sein de la structure du matériau ligno-cellulosique du fait de l'étape de remplissage (3) et par création d'un continuum de matière lors de l'étape de finition (4). Cela procure à la structure une qualité optique supplémentaire, car tout ou partie d'un rayonnement incident peut être transmis à travers cette structure de matériau composite par homogénéisation de la densité optique.

La continuité des indices optiques n'est généralement pas parfaite à partir d'un certain volume de structure ligno-cellulosique. En effet selon le matériau ligno-cellulosique natif et le taux de délignification, l'extraction de la lignine du matériau ligno-cellulosique peut ne pas être uniforme selon les plans de ses faces et en profondeur, si bien que la délignification, et, par voie de conséquence, le rendu optique n'apparaît pas homogène. Par exemple, dans le cas de traitement de bois, selon les essences, les zones de bois d'été et de bois de printemps peuvent ne pas avoir la même nature ou ne pas être différenciés. Il en va de même pour l'aubier et le duramen pour certaines essences. Il est ainsi possible, pour certains bois, notamment ceux présentant des cernes de croissances annuelles (alternance de bois d'été et de printemps), que l'une des parties, souvent le bois d'été soient moins promptes à subir le traitement des étapes de trempage (1) ou de lavage (2), laissant ainsi apparaitre après traitement par les étapes (3) et (4) des zones plus ou moins translucides ou transparentes, voire opaques. A contrario, en ce qui concerne des essences plus fragiles et généralement homogènes chimiquement, la réactivité de la structure face aux étapes (1) et (2) peut être sensiblement uniforme rendant le matériau sensiblement uniformément translucide ou transparent. La propriété optique est généralement observée sur la structure de matériau composite.

Typiquement, la structure de matériau composite comprend au moins une dimension d'au moins 2 mm et d'au plus 40 cm. Ces 40 cm peuvent correspondre à l'épaisseur totale d'un panneau CLT. Cela peut ne pas correspondre strictement aux dimensions de la structure avant traitement selon le procédé de l'invention. En effet, des changements dimensionnels peuvent résulter du procédé d'une modification de la structure du matériau ligno-cellulosique au cours des étapes (1) et (2), menant par exemple une déformation (légère torsion) ou une diminution de la taille du matériau composite par rapport au matériau ligno-cellulosique avant traitement, avec ou sans axe de déformation privilégié. La structure du matériau composite possède souvent une densité supérieure à celle du matériau ligno-cellulosique natif, par exemple de 5% à 1000% supérieure, voire entre de 10 à 200% supérieure, cette valeur dépendant notamment du matériau ligno-cellulosique, du taux de délignification et de la nature du composé de remplissage.

La structure de matériau composite obtenue selon le procédé de l'invention est de préférence un élément de finition, un élément de second oeuvre ou un élément de premier oeuvre.

Pour rappel il existe 3 types de coupes dans le bois:
- CLR (coupe longitudinale radiale)
- CT (coupe transversale)
- CLT (coupe longitudinale tangentielle).

Le demandeur a traité tous les types de coupes possibles, même si les exemples qui suivent ne concernent que des coupes CT et CLR dans les échantillons.

Il est à noter que selon l'invention, les coupes transversale et longitudinale, qui sont les coupes préférées, réagissent généralement de façon similaire au procédé.

L'homme du métier est à même de déterminer quelle coupe doit être privilégiée pour le traitement selon l'invention: à titre d'exemple, pour des applications structurelles prenant avantage des propriétés mécaniques améliorées, la coupe CLR sera privilégiée tandis que pour des applications prenant avantage des propriétés optiques nouvelles ce sera la coupe CT qui sera privilégiée.

### Pièce

La pièce selon le troisième aspect de l'invention peut être utilisée dans une grande variété d'utilisations en extérieur, auquel cas la pièce est généralement choisie parmi les soffites, les cadres de fenêtres, les portes et cadres de portes, les vérandas, les planches de rive, les abris de jardin, les terrasses (telles les platelages extérieurs et les dallages extérieurs) et les bâtiments à pans de bois (ou bardages bois), les aménagements urbains et similaires. Alternativement, la pièce peut être utilisée dans une grande variété d'utilisations en intérieur, auquel cas la pièce est généralement choisie parmi des éléments d'emballage (ou packaging) pour le luxe, des éléments de forme (ou design), des éléments de mobilier (tels que des meubles et produits de menuiserie voire contenants alimentaires tels que les bols de nourriture), des éléments d'intérieur automobile, des éléments d'intérieur de yachts ou de jets, des éléments nautiques, des éléments sportifs (tels que des skis), des éléments ou produits de grande consommation (telles que des lunettes de soleil ou des protections de téléphones), des éléments aéronautiques, et des éléments pour la construction.

### Figures

L'invention sera mieux comprise à la vue des dessins annexés sur lesquels :
- la Figure 1 représente schématiquement le principe du procédé de traitement selon l'invention ;
- la Figure 2 représente schématiquement un exemple de mise en oeuvre partielle d'une étape de traitement du procédé selon l'invention, ladite étape comportant l'immersion de la structure de matériau ligno-cellulosique dans un liquide ;
- la Figure 3 représente schématiquement un exemple de mise en oeuvre de l'étape de mise sous pression du procédé selon l'invention ;
- la Figure 4 représente schématiquement un exemple de mise en oeuvre complète de l'étape de remplissage (3) et de l'étape de finition (4) du procédé selon l'invention, dans le cas où ces étapes comportent l'immersion de la structure de matériau ligno-cellulosique dans un liquide selon la Figure 2 ;
- la Figure 5 représente schématiquement une vue par microscope électronique à balayage (MEB ou SEM en anglais) d'une coupe longitudinale de bois à l'état naturel ;
- la Figure 6 représente schématiquement une vue macroscopique en trois dimensions d'une structure de bois à l'état naturel (ou natif), avant traitement selon l'invention ;
- la Figure 7 représente schématiquement une vue microscopique en trois dimensions de la structure de bois à l'état naturel (ou natif), avant traitement selon l'invention, de la Figure 6 ;
- la Figure 8 représente schématiquement une vue à une échelle intermédiaire de la structure de bois, après les étapes de trempage (1) et de lavage (2) selon l'invention, des Figures 9 et 10 ;
- la Figure 9 représente schématiquement une vue macroscopique en trois dimensions de la structure de bois des Figures 6 et 7 après les étapes de trempage (1) et de lavage (2) selon l'invention ;
- la Figure 10 représente schématiquement une vue microscopique en trois dimensions de la structure de bois de la Figure 9 ;
- la Figure 11 représente schématiquement une vue macroscopique en trois dimensions de la structure de bois des Figures 9 et 10 après l'étape de remplissage par un composé de remplissage (3) ;
- la Figure 12 représente schématiquement une vue microscopique en trois dimensions de la structure de bois de la Figure 11 ;
- la Figure 13 représente schématiquement une vue macroscopique en trois dimensions de la structure de bois des Figures 11 et 12 après l'étape de finition (4), c'est-à-dire de la structure de bois composite obtenue par le procédé de traitement selon l'invention ;
- la Figure 14 représente schématiquement une vue microscopique en trois dimensions de la coupe de bois composite de la Figure 13 ;
- la Figure 15 reprend trois photographies par microscope électronique à balayage (MEB) à une échelle semi-microscopique d'une partie de structure de sapin à différentes étapes du procédé de traitement selon l'invention, à savoir de gauche à droite respectivement avant traitement de délignification, après délignification et avant imprégnation par un composé monomère, et après polymérisation du composé monomère ainsi imprégné ;
- la Figure 16 reprend deux photographies par microscope électronique à balayage (MEB) après agrandissement partiel de la partie de structure de sapin de la Figure 15, c'est-à-dire à une échelle microscopique, à savoir de gauche à droite respectivement avant traitement et après polymérisation du composé monomère imprégné ;
- la Figure 17 représente le schéma de principe de mesure de la flexion d'une structure de bois traitée par un procédé selon l'invention;
- la Figure 18 illustre le résultat de mesure de la flexion d'une structure de sapin, avant et après traitement ;
- la Figure 19 représente le schéma de principe de mesure de la compression axiale d'une structure de bois traitée par un procédé selon l'invention ;
- la Figure 20 illustre le résultat de mesure de la compression axiale d'une structure de sapin, avant et après traitement ;
- la Figure 21 représente le schéma de principe de mesure de la traction axiale d'une structure de bois traitée par un procédé selon l'invention ;
- la Figure 22 illustre le résultat de mesure de la traction axiale d'une structure de sapin, avant et après traitement ; et
- la Figure 23 reprend dix photographies par microscope Zeiss LSM710 Upright après traitement de six essences de bois différentes.

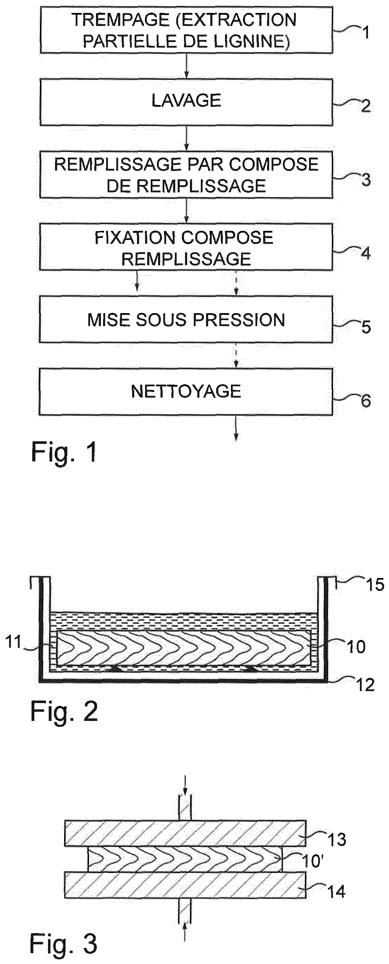

La Figure 1 représente schématiquement le procédé de traitement selon l'invention, par succession d'étapes, chacune étant représentée par une boîte. Chacune des boîtes correspond à l'étape portant le même numéro de référence du procédé selon l'invention, étant entendu que les références (5) et (6) sont des étapes optionnelles ainsi que le montrent les flèches en pointillés reliant les boîtes 4, 5 et 6.

On distingue ainsi, dans l'ordre, une première étape (1) qui est une étape de trempage de la structure de matériau ligno-cellulosique. L'étape (1) réalise une extraction partielle de la lignine de cette structure. Elle est suivie d'une deuxième étape (2) qui est une étape de lavage de la structure issue de l'étape (1), pour évacuer la lignine dissoute issue de l'étape (1). Cette étape de lavage (2) est suivie d'une troisième étape (3) de remplissage de la structure partiellement délignifiée issue de l'étape de lavage (2), par au moins un composé de remplissage. La dernière et quatrième étape (4) est une étape de fixation du composé de remplissage dans la structure issue de l'étape de remplissage (3). Cela permet d'obtenir une structure de matériau composite formée d'un réseau tridimensionnel de composé de remplissage transformé incorporé dans un réseau de cellulose et de lignine. Cette quatrième étape peut être suivie d'une cinquième étape (5) de mise sous pression de la structure issue de l'étape de finition (4), éventuellement elle-même suivie d'une sixième étape de finition de surface (6) de la structure (10) issue de l'étape (5).

La Figure 2 représente schématiquement un exemple de mise en oeuvre partielle d'une étape de traitement du procédé selon l'invention, ladite étape comportant l'immersion d'une structure de matériau ligno-cellulosique (10) dans un liquide.

La structure de matériau ligno-cellulosique illustrée est une structure de bois, par exemple de sapin. Elle est immergée dans une solution de traitement (11), qui peut être une solution organique de l'étape de trempage (1), une solution organique de l'étape de lavage (2) ou une solution comportant au moins un composé de remplissage de l'étape de remplissage (3). L'ensemble repose sur un support (15), par exemple en téflon, qui est lui-même fixé dans un bac (12), par exemple en inox.

La Figure 3 représente schématiquement un exemple de mise en oeuvre de l'étape optionnelle de mise sous pression (5) du procédé selon l'invention. Dans ce cas, la structure de matériau composite (10') est compressée au sein d'un appareil de compression (13, 14) composée de deux mâchoires symétriques (13) et (14) pouvant se rapprocher l'une de l'autre en prenant la structure (10') intercalaire en étau. Sur chacune des pièces (13) et (14) est exercée une force axiale en regard de la force exercée sur l'autre pièce (les deux forces étant représentées par des flèches), les rapprochant ainsi l'une de l'autre.

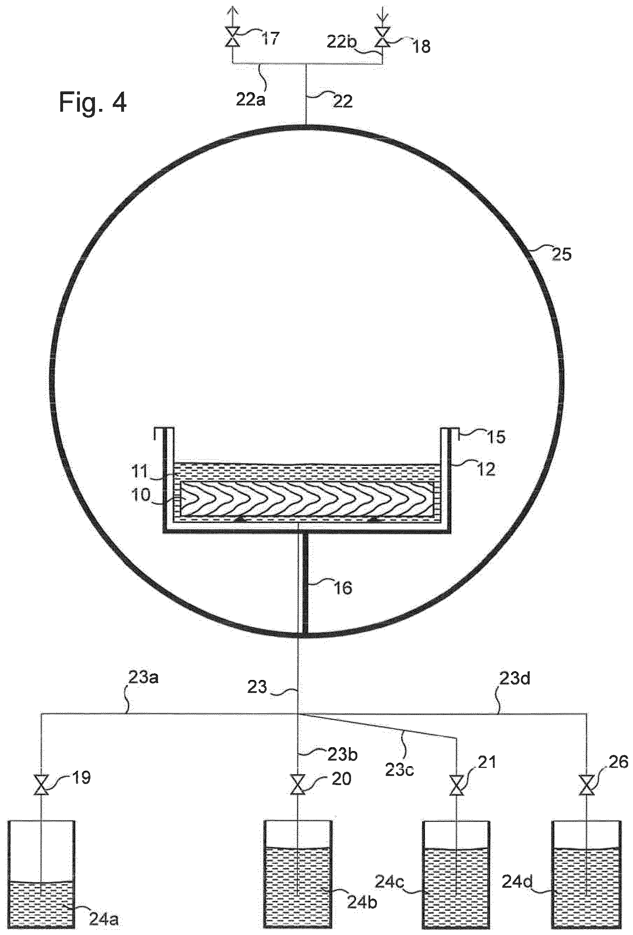

La Figure 4 représente schématiquement un exemple de mise en oeuvre complète de l'étape de remplissage (3) et de l'étape de finition (4) du procédé selon l'invention, dans le cas où ces étapes comportent l'immersion de la structure de matériau ligno-cellulosique dans un liquide selon la Figure 2.

Sur cette Figure, l'ensemble présenté sur la Figure 2 est disposé au sein d'une enceinte (25). Plus précisément, le bac (12) est fixé dans l'enceinte (25) au moyen d'un support métallique (16). L'enceinte (25) est telle qu'elle permet de contrôler les conditions de pression et de température qui sont présentes en son sein. Ces conditions dépendent principalement de la nature du composé de remplissage. L'enceinte (25) peut être un four à vide ou un autoclave.

Une conduite (22), qui se divise en une conduite (22a) et une conduite (22b), permet, au moyen des valves respectives (17) et (18), respectivement de faire le vide ou d'introduire du diazote N₂ au sein de l'enceinte (25).

Une conduite (23), qui se divise en une conduite (23a), une conduite (23b), une conduite (23c) et une conduite (23d), permettent, au moyen des valves respectives (19), (20), (21) et (26), d'évacuer ou d'introduire dans l'enceinte une solution respective (24a), (24b), (24c) ou (24d). Une solution pure (24a), (24b), (24c) ou (24d), ou bien un mélange éventuel d'au moins deux de ces solutions (24a), (24b), (24c) et (24d), constitue ainsi la solution de traitement (11) (qui peut varier selon l'étape ou la sous-étape du procédé considérée), dans laquelle baigne la structure de bois (10). Cela permet, pour la réalisation de l'étape de remplissage (3), de conduire un traitement de la structure de bois (10) par séries, chaque série comportant des immersions successives par exemple dans l'ordre d'utilisation des solutions. L'étape de traitement (3) comporte usuellement plusieurs séries, typiquement de 2 à 6 séries, par exemple 4 séries.

Il est possible de prévoir en variante du dispositif présenté sur la Figure 4 un autre dispositif comportant autant de solutions organiques de traitement que nécessaire, chaque solution de traitement étant associée à d'une conduite sur laquelle est présente une valve, reliée à la conduite (23) en relation directe avec l'enceinte (25).

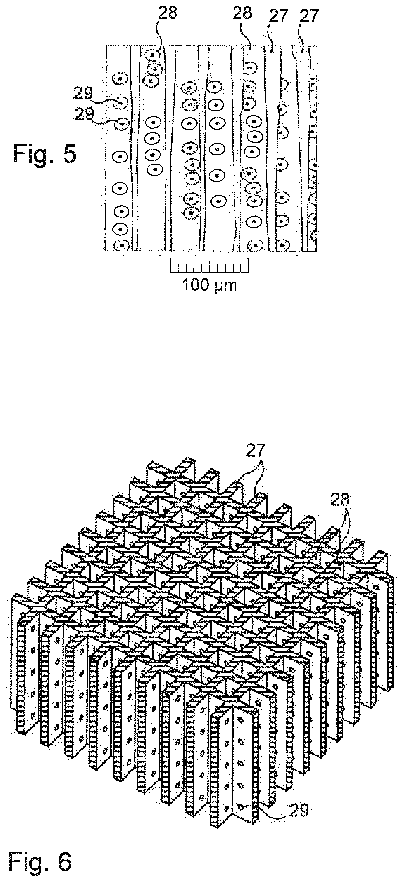

La Figure 5 représente schématiquement une vue par microscope électronique à balayage (MEB) d'une coupe longitudinale d'une structure de bois, par exemple de noyer, à l'état naturel. On y voit la micro-architecture du bois. A cette échelle, on distingue les cavités (ou *« lumen* ») (28) de cellulose délimitées par les parois (27) formées de fibres de cellulose, ainsi que les perforations transversales formant pores ou canaux (29) entre les cavités cellulaires. Ces cavités cellulaires ont une dimension transversale de 30 à 60 µm pour les bois de résineux et de 70 à 350 µm pour les bois de feuillus. Les perforations transversales (29) représentent des ponctuations aréolées pour le bois de résineux ou des orifices sensiblement circulaires pour le bois de feuillus, dont la dimension transversale varie d'environ 6 à environ 30 µm, et sont en moyenne d'environ 15 µm. La Figure 5 correspond sensiblement à une coupe dans le sens longitudinal de la structure représentée schématiquement à la Figure 6.

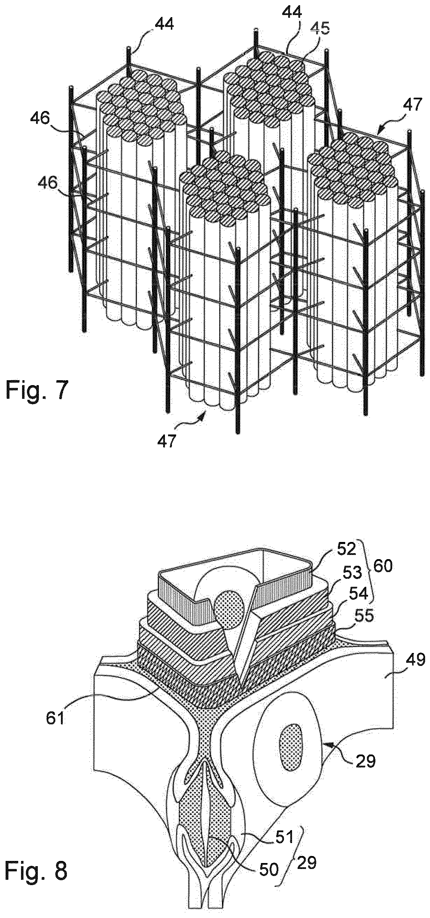

Les Figures 6 et 7 représentent schématiquement deux vues en trois dimensions, respectivement macroscopique et microscopique, d'une structure de bois à l'état naturel (ou natif), c'est-à-dire avant traitement selon l'invention. On y retrouve les cavités (28) de bois de taille moyenne dans le sens transversal d'environ 75 µm, avec des disparités selon la nature du bois, à savoir d'environ 30 à environ 60 µm pour les bois de résineux, et d'environ 70 à environ 350 µm pour les bois de feuillus. Ces cavités (28) sont délimitées par des parois cellulaires d'épaisseur moyenne d'environ 2 à environ 10 µm pour les bois de résineux et pour les bois de feuillus.

Comme on le voit sur la Figure 7, la micro-architecture du bois d'où découle sa résistance mécanique à l'état naturel provient de l'ensemble des parois des cavités cellulaires (28) qui sont constitués en tubes ou microfibrilles (45), formées elles-mêmes en faisceaux ou macrofibrilles (47). Les macrofibrilles (47) sont liées par liaison chimique à des structures de soutènement transversales d'hémicellulose (46), liées par liaisons chimiques transversales à des structures de soutènement longitudinales de lignine (44), cet ensemble (46, 44) servant de soutènement aux macrofibrilles (47) de cellulose.

Les Figures 8, 9 et 10 représentent schématiquement trois vues en trois dimensions, respectivement aux échelles intermédiaires entre macroscopique et microscopique, macroscopique et microscopique, d'une structure de bois après les étapes de trempage (1) et de lavage (2) selon l'invention.

On distingue la paroi cellulaire (49), qui s'est amincie par rapport à celle représentée sur les Figures 6 et 7. L'épaisseur de la paroi cellulaire (49) est d'environ 2 à environ 10 µm, en moyenne environ 6 µm. Les microfibrilles (45), l'hémicellulose (46) et les macrofibrilles (47) sont sensiblement inchangées par rapport aux Figures 6 et 7. La lignine (44') est encore présente mais « *allégée »,* c'est-à-dire en moindre quantité par rapport à la lignine (44) représentée aux Figures 6 et 7.

La Figure 8 détaille la paroi cellulaire 49, sur une jonction de parois (voir Figure (9)). La paroi cellulaire (49) de cellulose comprend une lamelle moyenne (61) d'épaisseur d'environ 0,2 à environ 1 µm, ainsi que deux parois, la paroi primaire (55) d'épaisseur d'environ 0,1 µm, et la paroi secondaire (60), elle-même constituée de trois sous-couches respectivement (52), (53) et (54) dans le sens de la cavité (28) vers l'extérieur, la première sous-couche (52) étant d'épaisseur d'environ 0,1 à environ 0,2 µm, la deuxième sous-couche (53) étant d'épaisseur d'environ 1 à environ 5 µm et la troisième sous-couche (54) étant d'épaisseur d'environ 0,1 à environ 0,2 µm. On distingue également la perforation transversale (29), qui est constituée d'un orifice proprement dit (50), de dimension moyenne d'environ 0,02 à 4 µm, entouré d'une perforation (51), de dimension moyenne d'environ 6 à 30 µm.

Lors de la délignification partielle effectuée par l'étape de trempage (1) associée à l'étape de lavage (2), la paroi primaire (65) et la troisième sous-couche (54) de la paroi secondaire (60) attenante ont été les plus délignifiées, étant elles-mêmes les couches ou sous-couches les plus chargées en lignine, la troisième sous-couche (52) elle-même très peu chargée en lignine, n'ayant pratiquement pas été délignifiée. Cela explique les différences de variations dimensionnelles au sein de la structure du matériau ligno-cellulosique qui se produisent lors de la délignification partielle selon l'invention.

A noter que la Figure 8 pourrait aussi bien illustrer, en adaptant les dimensions indiquées ci-dessus, le matériau avant traitement au cours des étapes de traitement que sont les étapes de trempage (1) et de lavage (2) du procédé selon l'invention. En effet, au cours de ces étapes, la seule modification constatée provient de l'épaisseur de certaines des couches et sous-couches ainsi qu'expliqué ci-dessus, qui se réduit au fur et à mesure du traitement.

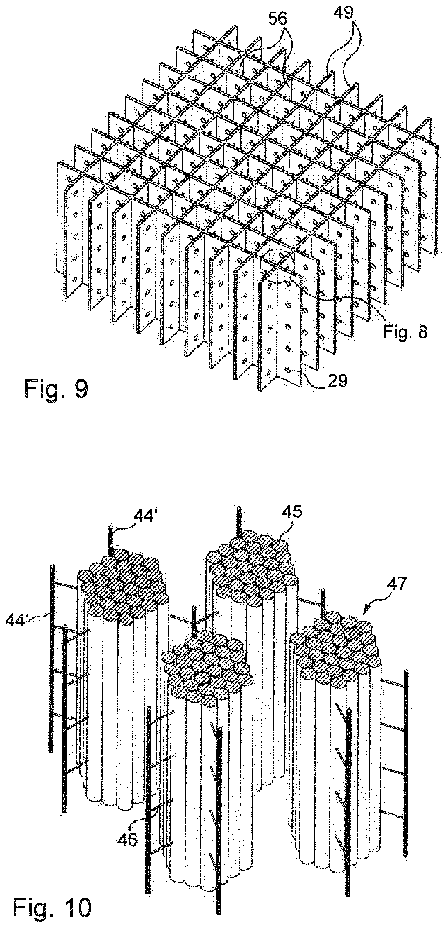

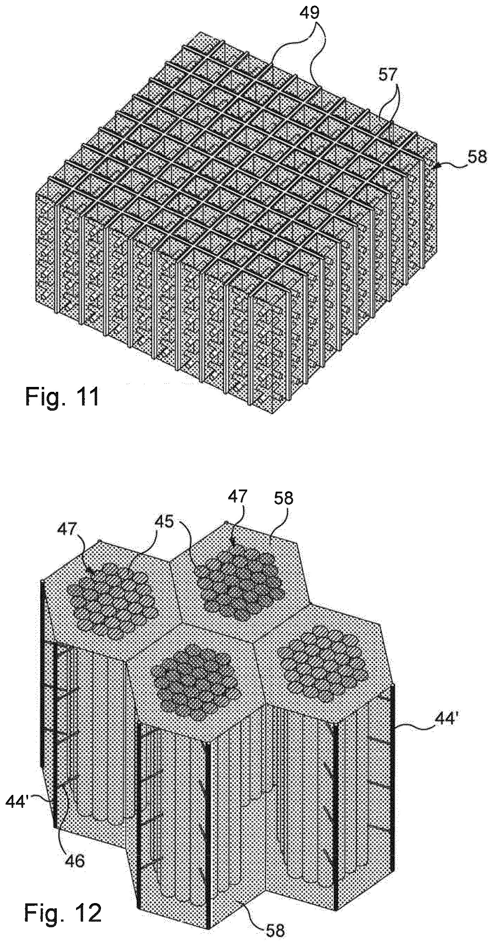

Les Figures 11 et 12 représentent schématiquement deux vues en trois dimensions, respectivement macroscopique et microscopique, de la structure de bois des Figures 9 et 10 après l'étape de remplissage par un composé de remplissage (3). On y retrouve les microfibrilles (45), la structure allégée de lignine (44'), la structure d'hémicellulose (46), les macrofibrilles (47), et les parois (49) des cavités (57). Ces cavités (57) sont à présent remplies de composé de remplissage, formant un réseau tridimensionnel de remplissage (58). En pratique cela revient à un remplissage des macrofibrilles et de leurs interstices par ce composé de remplissage, et éventuellement, le remplissage des microfibrilles par le composé de remplissage selon le degré de pénétration du composé de remplissage dans le matériau.

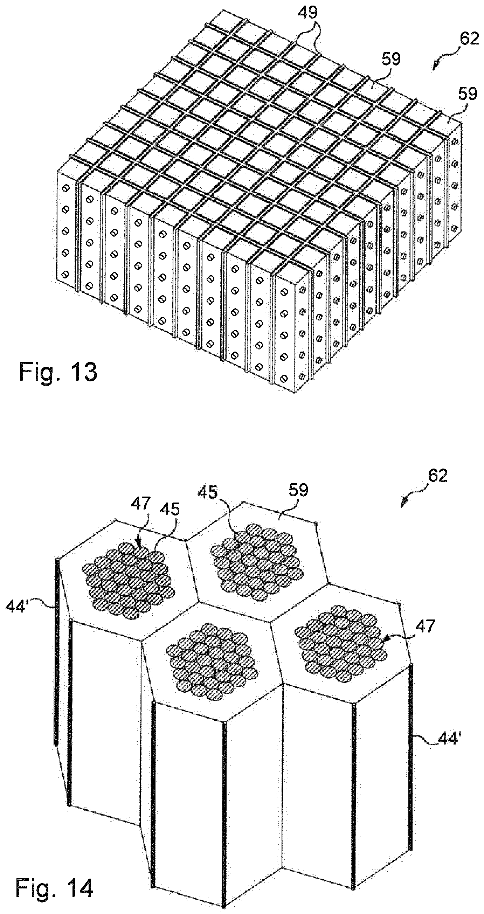

Les Figures 13 et 14 représentent schématiquement deux vues en trois dimensions, respectivement macroscopique et microscopique, de la structure de bois des Figures 11 et 12 après l'étape de finition (4) (consistant généralement en une polymérisation). Elles illustrent donc schématiquement la structure de bois composite obtenue par le procédé de traitement selon l'invention. On y retrouve les microfibrilles (45), la structure allégée de lignine (44'), la structure d'hémicellulose (46), les macrofibrilles (47), et les parois (49) du réseau tridimensionnel de remplissage (59).

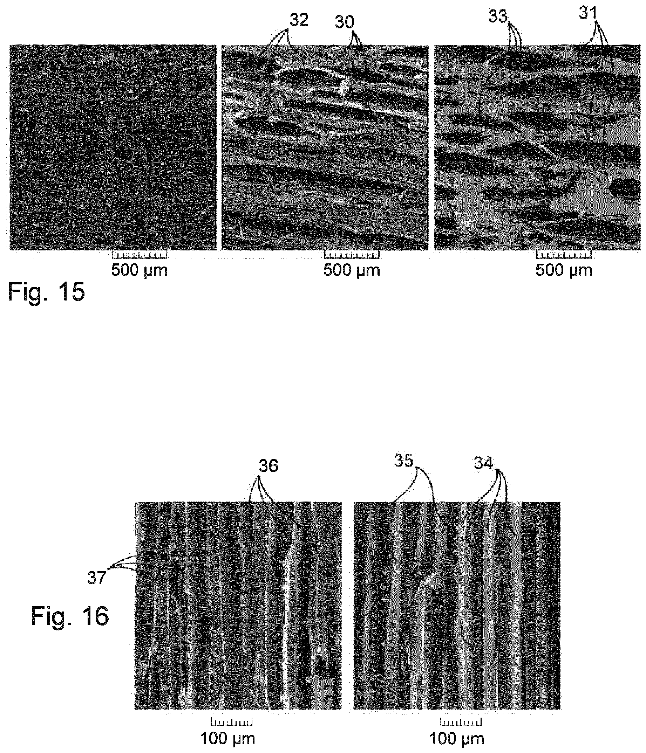

Les Figures 15 à 23 sont explicitées dans les exemples ci-après.

L'invention sera mieux comprise à la vue des exemples de réalisation qui suivent, en référence aux dessins annexés.

### Exemples

Les exemples qui suivent illustrent l'invention sans pour autant en limiter la portée.

### Exemple 1 : Procédé de traitement selon l'invention d'une structure de sapin

Un échantillon parallélépipédique de bois de sapin de dimensions 0,5 cm × 4 cm × 8,5 cm (l×L×h) a été soumis au procédé de traitement selon l'invention, ce qui a permis d'obtenir, dans le cadre d'expériences de laboratoire, un spécimen composite de dimensions 0,45 cm × 3,6 cm × 8,2 cm (l×L×h).

L'enceinte utilisée était un four à vide (25).

Ainsi, l'échantillon a été traité au cours d'une première étape de trempage (1) au moyen de trois sous-étapes successives identiques, chacune consistant en une immersion de l'échantillon dans une solution de 6 % de chlorure de sodium et 0,05 % d'hydroxyde de sodium, sous vide, à température constante de 70°C pendant 5 heures.

L'étape de lavage (2) de l'échantillon a ensuite été mise en oeuvre, par immersion de l'échantillon issu de l'étape de trempage (1) précédente, au moyen de 4 premières sous-étapes successives identiques, chacune consistant en une immersion de l'échantillon issu de l'étape ou de la sous-étape précédente dans une solution d'éthanol à 99 %, sous vide, à température constante de 60°C pendant 4 heures, suivies de 3 deuxièmes sous-étapes successives identiques, chacune consistant en une immersion de l'échantillon issu de la sous-étape précédente dans une solution d'hexane à 99 %, sous vide, à température constante de 50°C pendant 3 heures.

L'échantillon issu de l'étape de lavage (2) a ensuite été laissé au repos, de façon à ce que l'hexane encore présent dans l'échantillon de bois s'évapore, pendant une période de 2 heures.

Les étapes de remplissage (3) et de finition (4) de l'échantillon ainsi obtenu ont été réalisées au moyen du dispositif représenté sur la Figure 4.

L'étape de remplissage (3) a été conduite selon le second mode de réalisation, par imprégnation sous vide. Ainsi, il a été réalisé une solution monomérique *« primaire* » composée d'une part de méthacrylate de butyle et de trois parts de styrène, après la purification de ces composés à l'aide d'une poudre à filtrer faite de diatomite. La solution monomérique primaire a été mélangée pour une première série, à raison de 50 % en volume pour 50 % d'éthanol. La solution monomérique primaire a été mélangée, à raison de 75 % pour 25 % d'éthanol, pour une deuxième série. La solution monomérique primaire (à 100 %) a constitué la solution de la troisième série. La solution monomérique primaire (à 95 %), ajoutée à 0,05 part de catalyseur (asoisobutyronitrile), a constitué la solution de la quatrième série.

L'étape de remplissage (3) comprenait ainsi quatre séries, chaque série comprenant quatre sous-étapes successives, successivement par les solutions suivantes, réalisées à partir des solutions de solution de quatrième série (solution monomérique + catalyseur) (24a), d'éthanol (24b), d'hexane (24c) et de solution monomérique (24d), sans manipulation de la structure (10) et sans contact avec l'air. Le traitement de cette étape (3) a été effectué sous vide et à température ambiante, pendant une durée de 24 heures par série.

A la fin de l'étape de remplissage (3), la solution (11) a été vidangée en relâchant le vide (17) et en soufflant du diazote (18) pour saturer le volume de l'enceinte (25), ce qui a avantageusement empêché l'évaporation des monomères présents dans la structure (10).

L'étape de finition (4) qui a suivi était une étape de polymérisation des monomères méthacrylates de butyle et styrène remplissant l'échantillon à l'issue de l'étape de remplissage (3). Cette polymérisation, conduisant à la formation de co-polymère méthacrylate de butyle-styrène, a été conduite sous vide, pendant une durée de 20 à 24 heures pour 500 mL de solution monomérique (11) à une température de 80°C pendant les deux premières heures puis de 50° C pour la suite de l'étape.

Cette étape de finition (4) a été suivie d'une étape de mise sous pression (5) qui a été effectuée dans le dispositif de la Figure 3. L'échantillon issu de l'étape de finition (4) a été enveloppé entre deux feuilles de latex de 0,7 mm d'épaisseur chacune, les 2 feuilles recouvrant complètement l'échantillon et se recouvrant donc sur les 4 bords. Elles créaient ainsi une poche épousant la forme de l'échantillon. Cette poche a ensuite été mise sous vide à l'aide d'une valve, l'ensemble contenant-contenu formant ainsi la structure (10'). Le tout a été placé dans un four à température de 40° C pendant une durée de 24 heures.

L'étape de mise sous pression (5) a été suivie d'une étape de démoulage de la structure de composite de bois ainsi obtenu de la poche, puis d'une finition de surface au cours d'une étape de finition de surface (6) à l'aide d'un léger jet d'acétate d'éthyle.

L'échantillon de sapin composite ainsi obtenu était translucide.

Il est également possible de prévoir une variante où l'enceinte (25) est un autoclave (25), auquel cas une seule série peut être suffisante pour réaliser l'étape de remplissage (3), l'étape de finition (4) est effectuée par immersion dans un bain et les étapes de mise sous pression (5) et de finition de surface (6) n'étant alors pas nécessaires.

L'exemple 1 a été réalisé plusieurs fois, de façon à obtenir plusieurs échantillons de sapin composite qui ont été évalués dans des tests mécaniques destructifs et dans des tests optiques non destructifs, ainsi qu'il est explicité dans l'exemple 2 ci-après.

### Exemple 2 : Évaluation de la structure de sapin composite issue du procédé de traitement selon l'invention et obtenue à l'exemple 1

On a évalué l'échantillon de sapin formant structure de sapin composite obtenu dans l'exemple 1 à la fois pour ses propriétés de résistance mécanique mais également pour ses propriétés optiques.

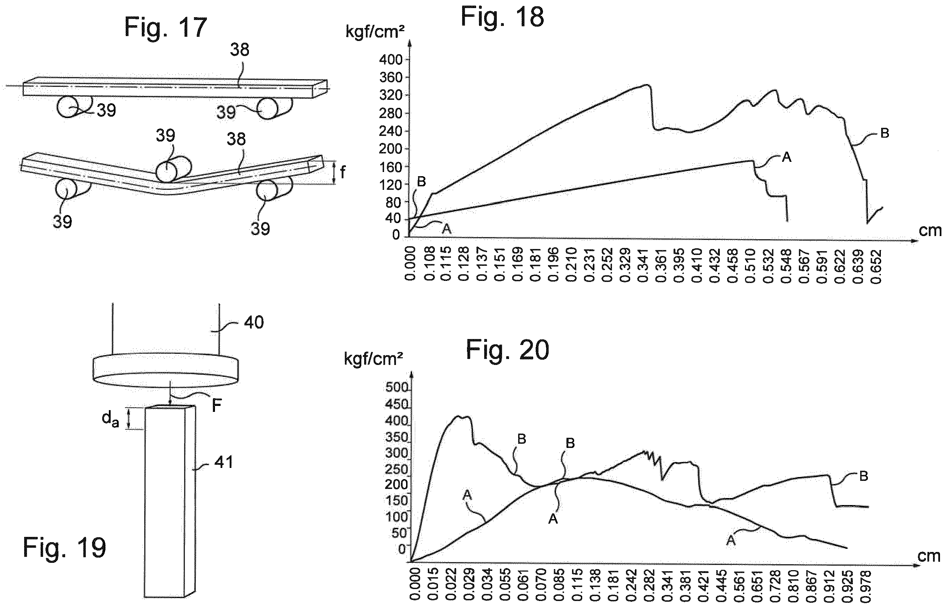

### Tests mécaniques illustrés par les Figures 17 à 22

### Mesure de flexion illustrée par les Figures 17 et 18

Cette mesure a été effectuée sur des échantillons de sapin de dimensions 0,7 cm × 2,5 cm × 10 cm (l×L×h), selon une méthode mise au point par le demandeur comportant trois poulies (39) identiques, de 3 cm de diamètre, exerçant une flexion sur la structure. Ces trois poulies (39) étaient espacées deux à deux de 3,5 cm, la distance entre les deux poulies (39) les plus éloignées étant de 7 cm.

La Figure 17 représente le schéma de principe de mesure de la flexion de l'échantillon de sapin formant structure (38) de sapin composite selon l'invention.

Comme on le voit sur la Figure 17, une force F a été appliquée sur l'échantillon, de plus en plus forte, perpendiculairement à son plan principal, et la contrainte maximale juste avant rupture (flèche f) a été mesurée.

La Figure 18 illustre le résultat de cette mesure de flexion de l'échantillon de sapin, avant traitement (courbe A) et après traitement (courbe B).

Pour l'échantillon de sapin naturel (ou natif) (courbe A), la contrainte maximale à la rupture a été mesurée à 175 kgf/cm², et la flèche de déformation était de 0,53 cm.

En revanche, pour l'échantillon de sapin composite translucide selon l'invention (courbe B), la contrainte maximale à la rupture a été mesurée à 350 kgf/cm², et la flèche de déformation était de 0,65 cm.

Ainsi, la densification cellulaire du sapin grâce au traitement selon l'invention a permis une résistance à un effort de flexion accrue de 200 %. En outre, à la différence du sapin natif, la rupture est plus progressive dans le cas du matériau de sapin composite selon l'invention. Par conséquent, le matériau a gagné en ductilité grâce au traitement selon l'invention. Sans vouloir être limité par une quelconque théorie, l'inventeur pense que ceci est probablement dû à une forte adhésion entre les fibres et la matrice polymérique.

### Mesure de compression axiale illustrée par les Figures 19 et 20

Cette mesure a été effectuée sur des échantillons de sapin de dimensions 1 cm × 3,5 cm × 10 cm (I×L×h), selon une méthode mise au point par le demandeur.

La Figure 19 représente le schéma de principe de mesure de la compression axiale de l'échantillon de sapin formant structure (41) de sapin composite selon l'invention.

Comme on le voit sur la Figure 19, une force F de compression a été appliquée sur l'échantillon (41) par un plateau écraseur (40) de 7 cm de diamètre, de plus en plus forte, parallèlement à son axe principal, et la contrainte maximale juste avant rupture (distance dₐ) a été mesurée.

La Figure 20 illustre le résultat de cette mesure de compression axiale de l'échantillon de sapin, avant traitement (courbe A) et après traitement (courbe B). Pour l'échantillon de sapin naturel (ou natif) (courbe A), la contrainte maximale à la rupture a été mesurée à 254 kgf/cm², et la déformation juste avant rupture était de 0,959 cm.

En revanche, pour l'échantillon de sapin composite translucide selon l'invention (courbe B), la contrainte maximale à la rupture a été mesurée à 430 kgf/cm², et la déformation juste avant rupture était de 0,978 cm.

Ainsi, la densification cellulaire du sapin grâce au traitement selon l'invention a permis une résistance à un effort de compression axiale accrue de 170 %. En outre, à la différence du sapin natif, la rupture est plus progressive dans le cas du matériau de sapin composite selon l'invention. Sans vouloir être limité par une quelconque théorie, l'inventeur pense que ceci est probablement dû à la nature du sapin composite, qui conduit à ce que l'apparition d'une fissure dans la matrice est stoppée par des fibres de bois renforcées par le polymère.

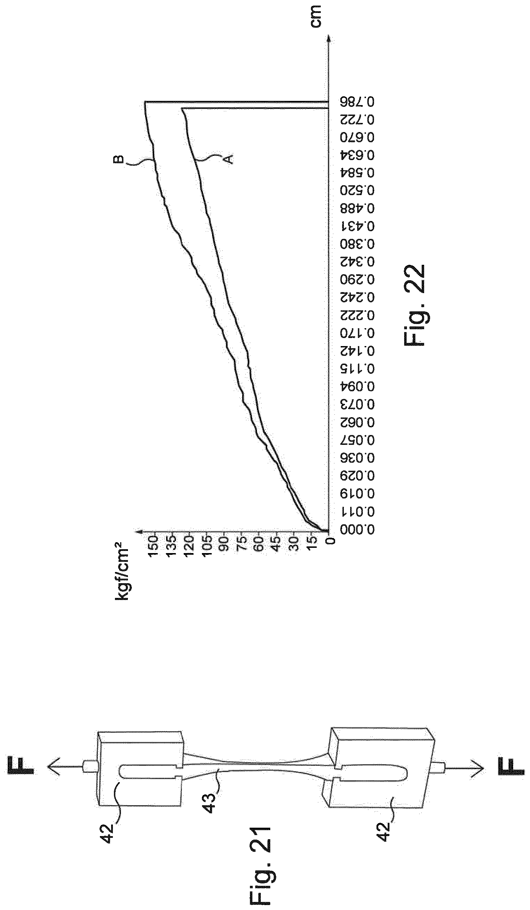

### Mesure de traction axiale illustrée par les Figures 21 et 22

Cette mesure a été effectuée sur des échantillons de sapin de dimensions 0,2 cm × 3 cm × 7,5 cm (l×L×h), selon une méthode mise au point par le demandeur.

La Figure 21 représente le schéma de principe de mesure de la traction axiale de l'échantillon de sapin formant structure (43) de sapin composite selon l'invention.

Comme on le voit sur la Figure 21, deux forces identiques et de direction opposée F de traction ont été appliquées sur l'échantillon par l'intermédiaire de deux griffes identiques (42), de plus en plus fortes, parallèlement à son axe principal, et la contrainte maximale avant rupture a été mesurée. Chaque griffe (42) avait pour dimensions 1,5 cm × 2,5 cm × 1 cm (l×L×h).

La Figure 22 illustre le résultat de cette mesure de traction axiale de l'échantillon de sapin, avant traitement (courbe A) et après traitement (courbe B).

Pour l'échantillon de sapin naturel (ou natif) (courbe A), la contrainte maximale à la rupture a été mesurée à 125 kgf/cm², et l'extension juste avant rupture était de 0,7 cm.

En revanche, pour l'échantillon de sapin composite translucide selon l'invention (courbe B), la contrainte maximale à la rupture a été mesurée à 165 kgf/cm², et l'extension avant rupture était de 0,7 cm.

Ainsi, la déformation plastique enregistrée a été d'environ 6 % avant rupture. Le comportement du matériau selon l'invention à l'effort de traction axiale est donc sensiblement identique à celui du matériau avant traitement. Il n'est pas constaté de dégradation de cette valeur par l'utilisation du procédé selon l'invention.

### Tests optiques illustrés par les Figures 15, 16 et 23

La structure de sapin composite obtenue à l'exemple 1 était translucide.

Les Figures 15 et 16 reprennent, à deux échelles différentes des photographies par microscope électronique à balayage (MEB) d'une partie de structure de bois de sapin traité à l'exemple 1, à différentes étapes du procédé de traitement selon l'invention.

La Figure 15 reprend trois photographies par microscope électronique à balayage (MEB) d'une partie de structure de bois de sapin à différentes étapes du procédé de traitement selon l'invention, à savoir de gauche à droite respectivement avant traitement de délignification (bois naturel ou natif), après délignification et avant imprégnation par un composé monomère, et après polymérisation du composé monomère ainsi imprégné. La Figure 16 reprend deux photographies par microscope électronique à balayage (MEB) après agrandissement partiel de la partie de structure de bois de sapin de la Figure 6, avant de gauche à droite respectivement avant traitement (bois naturel ou natif) et après polymérisation du composé monomère imprégné.

Les parties claires qui se remplissent après imprégnation du composé de remplissage, sont différentes une fois l'imprégnation effectuée, en particulier plus blanches et plus larges (voir la comparaison entre les parties 30 et 31 de la Figure 15, ainsi qu'entre les parties 36 et 34 de la Figure 16).

Les parties sombres (32 pour la deuxième photographie de la Figure 15, 33 pour la troisième photographie de la Figure 15, 37 pour la première photographie de la Figure 16 et 35 pour la seconde photographie de la Figure 16) correspondent à de l'air et pourraient être notablement réduites par une optimisation ultérieure du procédé. Ces photographies montrent l'état désordonné du bois avant la délignification, qui ne permet pas de pouvoir distinguer les cavités des cellules, l'état plus ordonné du bois après délignification, où l'on distingue nettement les cavités des cellules, et l'état des cavités de bois remplies partiellement par le polymère, après le procédé de traitement selon l'invention. On voit ainsi que le bois composite obtenu après le procédé de traitement selon l'invention est fortement structuré conformément à la micro-architecture originelle du bois : les parois des cellules qui étaient principalement constituées de cellulose se sont transformées en parois dans lesquelles se sont insérées des pelotes de polymère et le polymère a au moins partiellement rempli les cavités cellulaires.

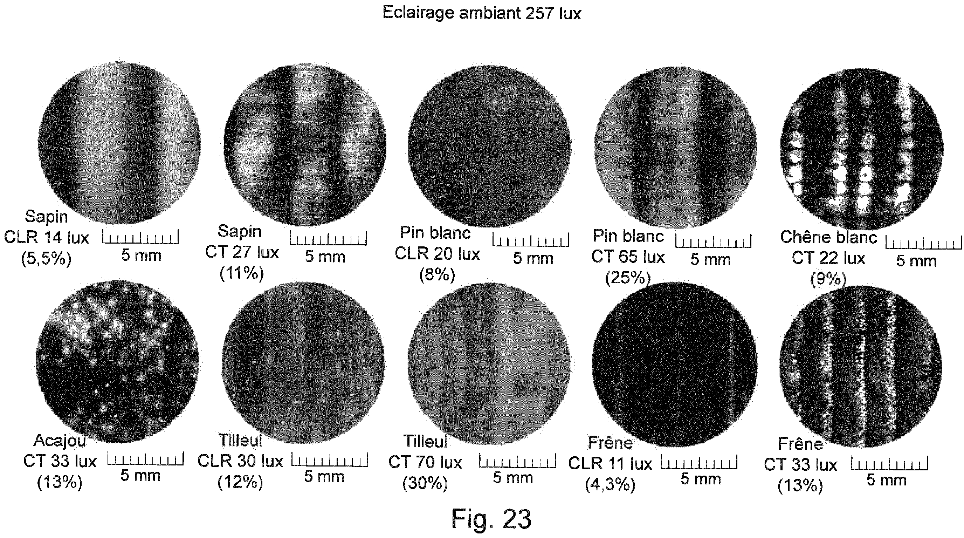

La Figure 23 reprend deux photographies par microscope Zeiss LSM710 Upright avec un objectif × 20 de la structure de sapin composite, en coupe longitudinale radiale (CLR) et en coupe transversale (CT).

L'éclairage ambiant est de 257 lux.

La première photographie est en plan de coupe longitudinale radiale (CLR) obtenue avec 14 lux de transmission lumineuse directe pour l'éclairage ambiant considéré (soit 5,5% de transmission lumineuse), tandis que la deuxième photographie de cet échantillon est en plan de coupe transversale (CT) obtenue avec 27 lux de transmission lumineuse directe pour l'éclairage ambiant considéré (soit 11% de transmission lumineuse).

Ces deux photographies montrent que le bois composite est une structure en trois dimensions c'est-à-dire que quel que soit le plan de coupe, le caractère translucide du sapin composite apparaît.

### Exemple 3 : Évaluation optique de structures composites de pin blanc, de chêne blanc, d'acajou, de tilleul et de frêne issues d'un procédé de traitement selon l'invention obtenues comme dans l'exemple 1

Le procédé de traitement de l'exemple 1 a été reproduit sur d'autres essences, à savoir sur des échantillons formant structures composites de cinq essences : le pin blanc, le chêne blanc, l'acajou, le tilleul et le frêne. On a évalué les propriétés optiques de transmission optique des échantillons de ces cinq essences de bois différentes.

La Figure 23 reprend huit photographies par microscope Zeiss LSM710 Upright avec un objectif × 20 de structures de bois composite réalisées à partir de ces cinq essences.

La première photographie de l'échantillon de pin blanc est en plan de coupe longitudinale radiale (CLR) obtenue avec 20 lux de transmission lumineuse directe pour l'éclairage ambiant considéré (soit 8% de transmission lumineuse), tandis que la deuxième photographie de cet échantillon est en plan de coupe transversale (CT) obtenue avec 65 lux de transmission lumineuse directe pour l'éclairage ambiant considéré (soit 25% de transmission lumineuse).

La seule photographie de l'échantillon de chêne blanc est en plan de coupe transversale (CT) obtenue avec 22 lux de transmission lumineuse directe pour l'éclairage ambiant considéré (soit 9% de transmission lumineuse).

La seule photographie de l'échantillon d'acajou est en plan de coupe transversale (CT) obtenue avec 33 lux de transmission lumineuse directe pour l'éclairage ambiant considéré (soit 13% de transmission lumineuse).

La première photographie de l'échantillon de tilleul est en plan de coupe longitudinale radiale (CLR) obtenue avec 30 lux de transmission lumineuse directe pour l'éclairage ambiant considéré (soit 12% de transmission lumineuse), tandis que la deuxième photographie de cet échantillon est en plan de coupe transversale (CT) obtenue avec 70 lux de transmission lumineuse directe pour l'éclairage ambiant considéré (soit 30% de transmission lumineuse).

La première photographie de l'échantillon de frêne est en plan de coupe longitudinale radiale (CLR) obtenue avec 11 lux de transmission lumineuse directe pour l'éclairage ambiant considéré (soit 4,3% de transmission lumineuse), tandis que la deuxième photographie de cet échantillon est en plan de coupe transversale (CT) obtenue avec 33 lux de transmission lumineuse directe pour l'éclairage ambiant considéré (soit 13% de transmission lumineuse).

Dans chaque cas, ces photographies montrent que le bois composite est une structure en trois dimensions c'est-à-dire que quel que soit le plan de coupe, le caractère translucide du bois composite apparaît.

Il serait possible d'améliorer notablement la transmission lumineuse du bois composite par affinage du procédé par l'homme du métier, notamment quant au contrôle de la délignification, de la profondeur de saturation/remplissage et la nature du composé de remplissage dont l'indice de réfraction une fois transformé doit être quasiment homogène avec l'indice de réfraction du substrat ligno-cellulosique composite.

## Revendications

1. Procédé de traitement d'une structure de matériau ligno-cellulosique, le matériau ligno-cellulosique étant de préférence du bois, ledit procédé comprenant les étapes suivantes :
(1) au moins une étape de trempage de la structure de matériau ligno-cellulosique par au moins un fluide pour dissoudre partiellement la lignine présente dans le matériau ;
(2) au moins une étape de lavage de la structure issue de l'étape (1) par au moins un fluide organique de sorte à évacuer la lignine dissoute issue de l'étape de trempage (1), de façon à produire une structure partiellement délignifiée ;
(3) au moins une étape de remplissage de la structure partiellement délignifiée issue de l'étape de lavage (2) par au moins un composé de remplissage, de sorte à produire une structure partiellement délignifiée remplie; et
(4) au moins une étape de finition de la structure partiellement délignifiée remplie issue de l'étape de remplissage (3), de sorte à obtenir une structure de matériau composite formée d'un réseau tridimensionnel de composé de remplissage transformé incorporé dans un réseau de cellulose et de lignine, la masse volumique de la structure de matériau composite obtenue étant supérieure à celle de la structure de matériau ligno-cellulosique avant traitement.

2. Procédé de traitement selon la revendication 1, dans lequel la structure de matériau ligno-cellulosique est un élément de finition, un élément de second oeuvre ou un élément de premier oeuvre.

3. Procédé de traitement selon l'une des revendications 1 et 2, dans lequel le fluide de l'étape de trempage (1) est choisi parmi :
- une solution aqueuse comprenant un mélange de chlorure de sodium et d'hydroxyde de sodium, ou un liquide aqueux comprenant de la monoéthanolamine, ou une solution basique comprenant KOH ;
- une solution aqueuse comprenant un mélange d'acide acétique et de peroxyde d'hydrogène, ou une solution acide comprenant HBr, H₂SO₄ ou H₃PO₄ ;
- un fluide comprenant au moins une enzyme, éventuellement en présence d'au moins un liquide ionique ou en présence d'au moins un liquide ionique et d'au moins un co-solvant ;
- un liquide ionique pur ;
- un liquide ionique contenant une ou plusieurs enzymes en solution ;
- un liquide ionique en mélange avec au moins un solvant miscible avec le liquide ionique ;
- un liquide ionique en mélange avec au moins un solvant miscible contenant une ou plusieurs enzymes en solution ;
- un système bi-phasique, dont l'une des phases est constituée d'un liquide ionique, pur ou mélange avec au moins un solvant miscible, et l'autre phase est constituée d'un fluide supercritique ;
- un système bi-phasique, dont l'une des phases est constituée d'un liquide ionique, pur ou mélange avec au moins un solvant miscible, et l'autre phase est constituée d'un fluide supercritique, contenant en outre une ou plusieurs enzymes en solution dans la phase contenant le liquide ionique ; et
- toute solution d'un composé pur ou d'un mélange de composés, contenant au moins une enzyme ; et leurs mélanges.

4. Procédé de traitement selon l'une des revendications 1 à 3, dans lequel l'étape de trempage est précédée d'une étape préalable de traitement, comportant au moins une sous-étape de pré-trempage d'une structure de matériau ligno-cellulosique par au moins un fluide organique ; suivie d'au moins une sous-étape de pré-lavage de la structure issue de la sous-étape de pré-trempage, par au moins un fluide organique, de sorte à évacuer les composés dissouts issus de la sous-étape de pré-trempage.

5. Procédé de traitement selon l'une des revendications 1 à 4, dans lequel le fluide organique de l'étape de lavage (2) est un liquide choisi dans le groupe formé par l'éthanol, l'hexane, l'isopropanol, l'heptane et leurs mélanges.

6. Procédé de traitement selon l'une des revendications 1 à 5, dans lequel le composé de remplissage de l'étape de remplissage (3) est à l'état liquide aux conditions de pression et de température de l'étape de remplissage (3), pour réaliser l'étape de remplissage (3) par trempage de la structure partiellement délignifiée dans le polymère ou co-polymère liquide.

7. Procédé de traitement selon l'une des revendications 1 à 6, dans lequel le composé de remplissage de l'étape de remplissage (3) est un monomère polymérisable présent dans une solution monomérique aux conditions de pression et de température de l'étape de remplissage (3), la solution monomérique comprenant en outre au moins un catalyseur.

8. Procédé de traitement selon la revendication 7, dans lequel la solution monomérique de l'étape de remplissage (3) comprend au moins un monomère choisi parmi :
- les monomères issus du pétrole parmi lesquels les méthacrylates ; les phtalates ; les nitriles ; le styrène et les dérivés styréniques ; les composés vinyliques ; les composés éthyléniques ; le butadiène ; l'isoprène ; et
- les monomères biosourcés parmi lesquels les terpènes ; le glycérol et les dérivés du glycérol obtenus après réaction avec au moins un composé parmi l'épichlorydrine, les isomères du propanediol et l'acide glycolique ; les dérivés des sucres ; les dérivés du furfural ; les dérivés des acides lactique et formique ; les monomères issus de l'huile de ricin ; les acides hydroxyalcanoïques ; le bio-éthylène ; le bio-éthylène glycol ; le bio-propylène ; le bio-1,4-butanediol ; les dérivés de la lignine ; et leurs mélanges.

9. Procédé de traitement selon l'une des revendications 1 à 8, dans lequel la lignine dissoute récupérée dans le fluide organique de l'étape de lavage (2) est utilisée dans un procédé de valorisation de la lignine pour la fabrication d'un matériau de construction ou d'un matériau utilisé en aéronautique ou d'un matériau d'emballage ou d'un biocarburant ou d'un composé pharmaceutique ou d'un composé chimique.

10. Procédé de traitement selon l'une des revendications 1 à 9, dans lequel le matériau ligno-cellulosique est du bois de résineux et de 50 à 85 %, de préférence de 50 à 75 %, en % poids, de la lignine présente dans la structure est dissoute au cours de l'étape de trempage (1).

11. Procédé de traitement selon l'une des revendications 1 à 9, dans lequel le matériau ligno-cellulosique est du bois de feuillus et de 40 à 60 %, de préférence de 45 à 55 %, en % poids, de la lignine présente dans la structure est dissoute au cours de l'étape de trempage (1).

12. Structure de matériau composite (62) comprenant de la lignine, de l'hémicellulose, de la cellulose et au moins un composé de remplissage, ladite structure étant obtenue par la mise en oeuvre du procédé de traitement selon l'une des revendications 1 à 11, dans laquelle le matériau composite forme un réseau tridimensionnel de composé de remplissage transformé (59) incorporé dans une structure (44', 45, 47, 46) de cellulose et de lignine.

13. Structure de matériau selon la revendication 12, telle que la structure est sensiblement translucide.

14. Structure de matériau selon l'une des revendications 12 et 13, telle que la structure est un élément de finition, un élément de second oeuvre ou un élément de premier oeuvre.

15. Pièce comprenant au moins une structure de matériau composite (62) selon l'une des revendications 12 à 14, ladite pièce étant un meuble ou une partie de meuble, un élément de bâtiment, une pièce automobile ou une pièce aéronautique.

## Patentansprüche

1. Verfahren zur Behandlung einer Struktur aus Lignozellulosematerial, wobei das Lignozellulosematerial vorzugsweise Holz ist, wobei das Verfahren die folgenden Schritte umfasst:
(1) mindestens einen Schritt des Benetzens der Struktur aus Lignozellulosematerial mit mindestens einem Fluid, um das im Material enthaltene Lignin teilweise aufzulösen;
(2) mindestens einen Schritt des Waschens der aus Schritt (1) hervorgegangenen Struktur mit mindestens einem organischen Fluid, um das im Ergebnis des Schritts des Benetzens (1) gelöste Lignin derart zu entfernen, dass eine teilweise delignifizierte Struktur entsteht;
(3) mindestens einen Schritt des Füllens der im Ergebnis des Schritts des Waschens (2) teilweise delignifizierten Struktur mit mindestens einer Füllmasse derart, dass eine teilweise delignifizierte gefüllte Struktur entsteht; und
(4) mindestens einen Schritt des Endbearbeitens der im Ergebnis des Schritts des Füllens (3) teilweise delignifizierten gefüllten Struktur derart, dass eine Struktur aus Verbundmaterial entsteht, die aus einem in ein Zellulose- und Lignin-Netzwerk integrierten dreidimensionalen Netzwerk aus umgewandelter Füllmasse gebildet wird, wobei die Volumenmasse der erhaltenen Struktur aus Verbundmaterial größer als die der Struktur aus Lignozellulosematerial vor der Behandlung ist.

2. Behandlungsverfahren nach Anspruch 1, wobei die Struktur aus Lignozellulosematerial ein endbearbeitetes Element, ein Ausbauelement oder ein Rohbauelement ist.

3. Behandlungsverfahren nach einem der Ansprüche 1 und 2, wobei das Fluid des Schritts des Benetzens (1) ausgewählt ist aus:
- einer wässrigen Lösung, die ein Gemisch aus Natriumchlorid und Natriumhydroxid umfasst, oder einer wässrigen Flüssigkeit, die Monoethanolamin umfasst, oder einer basischen Lösung, die KOH umfasst;
- einer wässrigen Lösung, die ein Gemisch aus Essigsäure und Wasserstoffperoxid umfasst, oder einer sauren Lösung, die HBr, H₂SO₄ oder H₃PO₄ umfasst;
- einem Fluid, das mindestens ein Enzym umfasst, gegebenenfalls bei Anwesenheit mindestens einer ionischen Flüssigkeit oder bei Anwesenheit einer ionischen Flüssigkeit und mindestens eines Co-Lösungsmittels;
- einer reinen ionischen Flüssigkeit;
- einer ionischen Flüssigkeit, die ein oder mehrere gelöste Enzyme enthält;
- einer ionischen Flüssigkeit, gemischt mit mindestens einem Lösungsmittel, das mit der ionischen Flüssigkeit mischbar ist;
- einer ionischen Flüssigkeit, gemischt mit mindestens einem mischbaren Lösungsmittel, das ein oder mehrere gelöste Enzyme enthält;
- einem Zweiphasensystem, von dem eine der Phasen aus einer reinen oder mit mindestens einem mischbaren Lösungsmittel gemischten ionischen Flüssigkeit besteht und die andere Phase aus einem superkritischen Fluid besteht;
- einem Zweiphasensystem, von dem eine der Phasen aus einer reinen oder mit mindestens einem mischbaren Lösungsmittel gemischten ionischen Flüssigkeit besteht und die andere Phase aus einem superkritischen Fluid besteht, das ferner ein oder mehrere gelöste Enzyme in der Phase enthält, die die ionische Flüssigkeit enthält; und
- jeder Lösung einer reinen Verbindung oder eines Verbindungsgemischs, das mindestens ein Enzym enthält; und deren Gemischen.

4. Behandlungsverfahren nach einem der Ansprüche 1 bis 3, wobei dem Schritt des Benetzens ein vorheriger Behandlungsschritt vorausgeht, der mindestens einen Unterschritt des Vorbenetzens einer Struktur aus Lignozellulosematerial mit mindestens einem organischen Fluid aufweist; gefolgt von mindestens einem Unterschritt des Vorwaschens der aus dem Unterschritt des Vorbenetzens hervorgegangenen Struktur mit mindestens einem organischen Fluid, um die im Ergebnis des Schritts des Vorbenetzens gelösten Verbindungen zu entfernen.

5. Behandlungsverfahren nach einem der Ansprüche 1 bis 4, wobei das organische Fluid des Waschschritts (2) eine Flüssigkeit ist, die aus der Gruppe ausgewählt ist, die von Ethanol, Hexan, Isopropanol, Heptan und deren Gemischen gebildet ist.

6. Behandlungsverfahren nach einem der Ansprüche 1 bis 5, wobei die Füllmasse des Füllschritts (3) unter Druck- und Temperaturbedingungen des Füllschritts (3) in flüssigem Zustand ist, um den Füllschritt (3) durch Benetzen der teilweise delignifizierten Struktur in dem flüssigen Polymer oder Co-Polymer durchzuführen.

7. Behandlungsverfahren nach einem der Ansprüche 1 bis 6, wobei die Füllmasse des Füllschritts (3) ein polymerisierbares Monomer ist, das in einer Monomerlösung unter Druck- und Temperaturbedingungen des Füllschritts (3) vorhanden ist, wobei die Monomerlösung ferner mindestens einen Katalysator umfasst.

8. Behandlungsverfahren nach Anspruch 7, wobei die Monomerlösung des Füllschritts (3) mindestens ein Monomer umfasst, das ausgewählt ist aus:
- den Monomeren, die aus Erdöl hervorgegangen sind, zu denen die Methacrylate gehören; den Phtalaten; den Nitrilen; dem Styrol und den Styrolderivaten; den Vinylverbindungen; den Ethylenverbindungen; Butadien; Isopren; und
- den biobasierten Monomeren, zu denen die Terpene gehören; dem Glycerol und den Glycerolderivaten, erhalten nach Reaktion mit mindestens einer Verbindung, ausgewählt aus Epichlorydrin, den Propandiolisomeren und der Glycolsäure; den Zuckerderivaten; den Furfuralderivaten; den Milch- und Ameisensäurederivate; den aus dem Rizinusnöl hervorgegangenen Monomeren; den Hydroxyalkansäuren; Bioethylen; Bioethylenglycol; Biopropylen; Bio-1,4-butanediol; den Ligninderivaten und deren Gemischen.

9. Behandlungsverfahren nach einem der Ansprüche 1 bis 8, wobei das gelöste, im organischen Fluid des Waschschritts (2) zurückgewonnene Lignin in einem Lignin-Verwertungsverfahren zur Herstellung eines Baumaterials oder eines Materials, das in der Luftfahrt verwendet wird, oder eines Verpackungsmaterials oder eines Biokraftstoffs oder einer pharmazeutischen Verbindung oder einer chemischen Verbindung verwendet wird.

10. Behandlungsverfahren nach einem der Ansprüche 1 bis 9, wobei das Lignozellulosematerial Holz von Nadelhölzern ist und 50 bis 85 %, vorzugsweise 50 bis 75 %, in Gew.-%, des in der Struktur vorhandenen Lignins während des Schritts des Benetzens (1) gelöst wird.

11. Behandlungsverfahren nach einem der Ansprüche 1 bis 9, wobei das Lignozellulosematerial Holz von Laubhölzern ist und 40 bis 60 %, vorzugsweise 45 bis 55 %, in Gew.-%, des in der Struktur vorhandenen Lignins während des Schritts des Benetzens (1) gelöst wird.

12. Struktur aus Verbundmaterial (62), umfassend Lignin, Hemizellulose, Zellulose und mindestens eine Füllmasse, wobei die Struktur durch die Durchführung des Behandlungsverfahrens nach einem der Ansprüche 1 bis 11 erhaltbar ist, bei dem das Verbundmaterial ein in eine Zellulose- und Lignin-Struktur (44', 45, 47, 46) integriertes dreidimensionales Netzwerk aus umgewandelter Füllmasse (59) bildet.

13. Materialstruktur nach Anspruch 12, die derart ist, dass die Struktur etwa durchscheinend ist.

14. Materialstruktur nach einem der Ansprüche 12 und 13, die derart ist, dass die Struktur ein endbearbeitetes Element, ein Ausbauelement oder ein Rohbauelement ist.

15. Teil, umfassend mindestens eine Struktur aus Verbundmaterial (62) nach einem der Ansprüche 12 bis 14, wobei das Teil ein Möbel oder ein Möbelteil, ein Bauelement, ein Kraftfahrzeugteil oder ein Luftfahrtteil ist.

## Claims

1. A treatment process for treating a structure of lignocellulosic material, the lignocellulosic material being preferably wood, said process comprising the following steps:
(1) at least one step of soaking the structure of lignocellulosic material with at least one fluid to partially dissolve the lignin present in the material;
(2) at least one step of washing the structure resulting from step (1) with at least one organic fluid so as to discharge the dissolved lignin resulting from the soaking step (1), so as to produce a partially delignified structure;
(3) at least one step of filling the partially delignified structure resulting from the washing step (2) with at least one filling compound, so as to produce a filled partially delignified structure; and
(4) at least one step of finishing the filled partially delignified structure resulting from the filling step (3), so as to obtain a composite material structure formed of a three-dimensional network of transformed filling compound incorporated in a network of cellulose and lignin, the density of the composite material structure obtained being higher than that of the lignocellulosic material structure before treatment.

2. A treatment process according to claim 1, wherein the structure of lignocellulosic material is a trimming member, a finishing member or a structure member.

3. A treatment process according to one of claims 1 and 2, wherein the fluid of soaking step (1) is chosen from:
- an aqueous solution comprising a mixture of sodium chloride and sodium hydroxide, or an aqueous liquid comprising monoethanolamine, or a basic solution comprising KOH;
- an aqueous solution comprising a mixture of acetic acid and hydrogen peroxide, or an acidic solution comprising HBr, H₂SO₄ or H₃PO₄;
- a fluid comprising at least one enzyme, possibly in the presence of at least one ionic liquid or in the presence of at least one ionic liquid and at least one cosolvent;
- a pure ionic liquid;
- an ionic liquid containing one or more enzymes in solution;
- an ionic liquid in a mixture with at least one solvent miscible with the ionic liquid;
- an ionic liquid in a mixture with at least one miscible solvent containing one or more enzymes in solution;
- a biphasic system, of which one of the phases is constituted by an ionic liquid, pure or mixed with at least one miscible solvent, and the other phase is constituted by a supercritical fluid;
- a biphasic system, of which one of the phases is constituted by an ionic liquid, pure or in a mixture with at least one miscible solvent, and the other phase is constituted by a supercritical fluid, furthermore containing one or more enzymes in solution in the phase containing the ionic liquid; and
- any solution of a pure compound or of a mixture of compounds, containing at least one enzyme; and mixtures thereof.

4. A treatment process according to one of claims 1 to 3, wherein the soaking step is preceded by a prior treatment step, comprising at least one sub-step of pre-soaking a structure of lignocellulosic material with at least one organic fluid; followed by at least one sub-step of pre-washing of the structure resulting from the pre-soaking sub-step, with at least one organic fluid, so as to discharge the dissolved compounds resulting from the sub-step of pre-soaking.

5. A treatment process according to one of claims 1 to 4, wherein the organic fluid of the washing step (2) is a liquid chosen from the group formed by ethanol, hexane, isopropanol, heptane and mixtures thereof.

6. A treatment process according to one of claims 1 to 5, wherein the filling compound of the filling step (3), is in the liquid state under the conditions of pressure and temperature of the filling step (3), to carry out the filling step (3) by soaking the partially delignified structure in the liquid co-polymer or polymer.

7. A treatment process according to one of claims 1 to 6, wherein the filling compound of the filling step (3), is a polymerisable monomer present in a monomeric solution at the conditions of pressure and temperature of the filling step (3), the monomer solution further comprising at least one catalyst.

8. A treatment process according to claim 7, wherein the monomeric solution of the filling step (3) comprises at least one monomer chosen from:
- monomers produced from petroleum among which are methacrylates, phthalates; nitriles; styrene and styrenic derivatives; vinyl compounds; ethylenic compounds; butadiene; isoprene; and
- bio-sourced monomers among which are terpenes; glycerol and glycerol derivatives obtained after reaction with at least one of epichlorohydrin, isomers of propanediol and glycolic acid; derivatives of sugars; furfural derivatives; lactic and formic acid derivatives; monomers produced from castor oil; hydroxyalkanoic acids; bio-ethylene; bio-ethylene glycol; bio-propylene; bio-1,4-butanediol; lignin derivatives; and mixtures thereof.

9. A treatment process according to one of claims 1 to 8, wherein the dissolved lignin recovered from the organic fluid of washing step (2) is used in a process of exploiting the lignin for the manufacture of a construction material or of a material used in aeronautics or of a packaging material or of a biofuel or of a pharmaceutical compound or of a chemical compound.

10. A treatment process according to one of claims 1 to 9, wherein the lignocellulosic material is softwood and 50 to 85 %, preferably 50 to 75%, by weight %, of the lignin present in the structure is dissolved during the soaking step (1).

11. A treatment process according to one of claims 1 to 9, wherein the lignocellulosic material is hardwood and 40 to 60 %, preferably 45 to 55 %, by weight %, of the lignin present in the structure is dissolved during the soaking step (1).

12. A composite material structure (62) comprising lignin, hemicellulose, cellulose and at least one filling compound, said structure being obtained by the implementation of the treatment process according to one of claims 1 to 11, wherein the composite material structure forms a three-dimensional network of transformed filling compound (59) incorporated in a structure (44', 45, 47, 46) of cellulose and lignin.

13. A material structure according to claim 12, such that the structure is substantially translucent.

14. A material structure according to one of claims 12 and 13, such that the structure is a trimming member, a finishing member or a structure member.

15. A part comprising at least one composite material structure (62) according to one of claims 12 to 14, said part being an item of furniture or part of an item of furniture, a component of a building, an automotive part or an aeronautical part.
